# EUROPEAN PATENT APPLICATION

(11) **EP 2 838 038 A1**
(43) Date of publication of application: **18.02.2015**
(21) Application number: 14179001.4
(22) Date of filing: 29.07.2014
(51) Int. Cl.: G06F 17/30

(54) **System for storing and searching multi-page image files**

(30) Priority: 31.07.2013 CN 201310330700
(71) Applicant: Ricoh Company Ltd., Tokyo 143-8555 (JP)
(72) Inventor: Tong, Lianfang, Shanghai (CN); Chen, Jian, Shanghai (CN); Shen, Xu, Shanghai (CN); Liu, Chen, Shanghai (CN); Moroi, Shohei, Tokyo 143-8555 (JP)
(74) Representative: Leeming, John Gerard

(57) **Abstract**

A cloud server and a system for storing and searching image files configured to add search information for a search by a user to page images constituting an image file are disclosed. In the system for storing and searching the image files, an input display part of a user terminal displays a page image notification screen to make the user add the search information to the current displayed page image, a user-side communication part sends the search information and the current displayed page image to the cloud server, and an addition control part of the cloud server adds the search information to the corresponding page image.

## Description

The present invention generally relates to a cloud server and a system for storing and searching image files, and specifically, a cloud server and a system for storing and searching image files that add search information for the searching of a user to the image files.

In the prior art, an image file can be directly searched by inputting text information such as a keyword, and the search process is as follows: when a user stores an image file into memory, text information such as a keyword is added to the image file as needed, and the text information is stored into the memory in association with the image file. In this way, the corresponding image file can be found only by inputting the added text information by the user.

In the above image file searching method, the text information is added based on the linguistic habit of the user, and it is difficult for the user to forget the text information; therefore, when the user finds an image file that was previously processed, a search result can be obtained immediately. Thus, the image file search method has a high accuracy, a clear objective, and an individualized search can be realized.

However, it is not possible for a user to identify a page of the image file directly by the above image file search method, although the image file can be identified. When the user wants to preview a page of the image file, it is necessary to open the image file and perform a secondary search; therefore the search efficiency cannot be improved significantly. Furthermore, when the user performs the secondary search, the secondary search can be performed only based on the content described in the image file. If the user has forgotten the specific descriptive content and remembers only the general meaning, it is difficult to formulate a standardized and individual search.

In view of the above problems, the present invention has an objective to provide a cloud server and a system for storing and searching image files, that can directly find out a page image corresponding to search information from an image file based on the search information.

In order to achieve the above objective, the present invention adopts the following structure.

According to an aspect of the present invention, a system for storing and searching image files is provided. The system adds search information to the image file with a plurality of pages and performs a search based on the search information. The system includes a cloud server, configured to store the image file with a plurality of page images corresponding to the pages; and at least one user terminal, configured to be communicably connected to the cloud server via a network, respectively, wherein the cloud server includes a page image storage part, a search information storage part, an addition control part and a server-side communication part, the user terminal includes a screen storage part, a user-side communication part and an input display part, the page image storage part stores at least the page images, the server-side communication part sends at least the page images to the user terminal, the user-side communication part receives at least the page images from the cloud server, the screen storage part stores at least a page image notification screen and an input screen for adding the search information, the input display part displays at least the page image notification screen to notify a user of the contents of the current page image, and displays the input screen for adding the search information to make the user input the search information based on the contents, the user-side communication part sends the search information corresponding to the current page image to the cloud server, the server-side communication part receives the search information from the user terminal, and the addition control part adds the search information to the corresponding page image, and controls the search information storage part so that the search information is stored in association with the page image.

According to the cloud server and the system for storing and searching image files, an input display part of a user terminal displays a page image notification screen to make the user add the search information to the current displayed page image, a user-side communication part sends the search information and the current displayed page image to the cloud server, and an addition control part of the cloud server adds the search information to the corresponding page image. Therefore, the user can directly search the page images constituting the image file based on the previously input search information, and the efficiency of the search can be improved.

Furthermore, the search information which is added to the page image by the user, is added based on the linguistic habit of the user; therefore, it is difficult for the user to forget the search information that is added by himself and individuation of the search can be realized.

### BRIEF DESCRIPTION OF THE DRAWINGS

FIG. 1 is a block diagram of an image file storing and searching system according to the first embodiment of the present invention;
FIG. 2 is a block diagram of a cloud server according to the first embodiment of the present invention;
FIG. 3 is a block diagram of a user terminal according to the first embodiment of the present invention;
FIG. 4 is a schematic drawing of a login screen according to the first embodiment of the present invention;
FIG. 5 is a schematic drawing of a page image notification screen according to the first embodiment of the present invention;
FIG. 6 is a schematic drawing of an addition method selection screen according to the first embodiment of the present invention;
FIG. 7 is a schematic drawing of a character input screen according to the first embodiment of the present invention;
FIG. 8 is a schematic drawing of a voice input screen according to the first embodiment of the present invention;
FIG. 9 is a schematic drawing of a recognition result confirmation screen according to the first embodiment of the present invention;
FIG. 10 is a schematic drawing of an image input screen according to the first embodiment of the present invention;
FIG. 11 is a schematic drawing of a question and answer display region according to the first embodiment of the present invention;
FIG. 12 is a schematic drawing of a comment display region according to the first embodiment of the present invention;
FIG. 13 is a schematic drawing of a voice display region according to the first embodiment of the present invention;
FIG. 14 is a schematic drawing of an image display region according to the first embodiment of the present invention;
FIG. 15 is a schematic drawing of an information mapping table according to the first embodiment of the present invention;
FIG. 16 is a flowchart of adding a first type of search information according to the first embodiment of the present invention;
FIG. 17 is a schematic drawing of a search information addition presentation region according to the first embodiment of the present invention;
FIG. 18 is a flowchart of adding a second type of search information according to the first embodiment of the present invention;
FIG. 19 is a flowchart of adding a third type of search information according to the first embodiment of the present invention;
FIG. 20 is a flowchart of adding a fourth type of search information according to the first embodiment of the present invention;
FIG. 21 is a flowchart of adding a fifth type of search information according to the first embodiment of the present invention;
FIG. 22 is a schematic drawing of a search method selection screen according to the first embodiment of the present invention;
FIG. 23 is a schematic drawing of an input method selection screen according to the first embodiment of the present invention;
FIG. 24 is a flowchart of searching a first type of search information according to the first embodiment of the present invention;
FIG. 25 is a flowchart of searching a fourth type of search information according to the first embodiment of the present invention;
FIG. 26 is a flowchart of searching a fifth type of search information according to the first embodiment of the present invention;
FIG. 27 is a schematic drawing of a search result screen according to the first embodiment of the present invention;
FIG. 28 is a schematic drawing of an image classification addition screen according to a variation of the present invention;
FIG. 29 is a schematic drawing of an image classification search screen according to a variation of the present invention; and
FIG. 30 is a schematic drawing of an image viewing screen according to a variation of the present invention.

### DETAILED DESCRIPTION OF THE PREFERRED EMBODIMENTS

In the following, the cloud server and the image storing and searching system according to the embodiments of the present invention will be described in detail with reference to the accompanying drawings.

According to an aspect of the present invention, a system for storing and searching image files is provided. The system adds search information to the image file with a plurality of pages and performs a search based on the search information. The system includes a cloud server, configured to store the image file with a plurality of page images corresponding to the pages; and at least one user terminal, configured to be communicably connected to the cloud server via a network, respectively, wherein the cloud server includes a page image storage part, a search information storage part, an addition control part and a server-side communication part, the user terminal includes a screen storage part, a user-side communication part and an input display part, the page image storage part stores at least the page images, the server-side communication part sends at least the page images to the user terminal, the user-side communication part receives at least the page images from the cloud server, the screen storage part stores at least a page image notification screen and an input screen for adding the search information, the input display part displays at least the page image notification screen to notify a user of the contents of the current page image, and displays the input screen for adding the search information to make the user input the search information based on the contents, the user-side communication part sends the search information corresponding to the current page image to the cloud server, the server-side communication part receives the search information from the user terminal, and the addition control part adds the search information to the corresponding page image, and controls the search information storage part so that the search information is stored in association with the page image.

In such an aspect, the page image storage part further stores page attribute information indicating an attribute of the page image, the user-side communication part receives the page attribute information from the cloud server while receiving the page images simultaneously, sends the corresponding page attribute information to the cloud server while sending the search information simultaneously, and the addition control part controls the search information storage part so that the page attribute information is stored in association with the search information.

In such an aspect, the search information includes at least one of a keyword as a first type of search information, a question and answer as a second type of search information, a comment as a third type of search information, a voice as a fourth type of search information and an image as a fifth type of search information, the first type of search information, the second type of search information and the third type of search information are character data, and the fourth type of search information is voice data, and the fifth type of search information is image data.

In such an aspect, the page image notification screen includes a search information addition method selection region, the search information addition method selection region includes a first type of search information addition button, a second type of search information addition button, a third type of search information addition button, a fourth type of search information addition button and a fifth type of search information addition button, the screen storage part stores an addition method selection screen including at least a character input selection button, a character input screen as the input screen for adding the search information, a voice input screen as the input screen for adding the search information and an image input screen as the input screen for adding the search information. When the first type of search information addition button is selected, the input display part displays the addition method selection screen to make the user select an addition method, and displays the character input screen to make the user input character data as the first type of search information if the character input selection button is selected. When the second type of search information addition button is selected, the input display part displays the addition method selection screen to make the user select the addition method, and displays the character input screen to make the user input character data as the second type of search information if the character input selection button is selected. When the third type of search information addition button is selected, the input display part displays the addition method selection screen to make the user select the addition method, and displays the character input screen to make the user input character data as the third type of search information if the character input selection button is selected. When the fourth type of search information addition button is selected, the input display part displays the voice input screen to make the user input voice data as the fourth type of search information. And when the fifth type of search information addition button is selected, the input display part displays the image input screen to make the user input image data as the fifth type of search information.

In such an aspect, the system further comprises a voice recognition part, the addition method selection screen further includes a voice input selection button. When the first type of search information addition button and the voice input selection button are selected, the input display part displays the voice input screen to make the user input voice data, and the voice recognition part recognizes the voice data as character data and regards the character data as the first type of search information. When the second type of search information addition button and the voice input selection button are selected, the input display part displays the voice input screen to make the user input voice data, and the voice recognition part recognizes the voice data as character data and regards the character data as the second type of search information. And when the third type of search information addition button and the voice input selection button are selected, the input display part displays the voice input screen to make the user input voice data, and the voice recognition part recognizes the voice data as character data and regards the character data as the third type of search information.

In such an aspect, the system further comprises an image recognition part, the addition method selection screen further includes an image input selection button. When the first type of search information addition button and the image input selection button are selected, the input display part displays the image input screen to make the user input image data, and the image recognition part recognizes the image data as character data and regards the character data as the first type of search information. When the second type of search information addition button and the image input selection button are selected, the input display part displays the image input screen to make the user input image data, and the image recognition part recognizes the image data as character data and regards the character data as the second type of search information. And when the third type of search information addition button and the image input selection button are selected, the input display part displays the image input screen to make the user input image data, and the image recognition part recognizes the image data as character data and regards the character data as the third type of search information.

In the above image file storing and searching system including the voice recognition part or the image recognition part, the cloud server further includes a searching part, the screen storage part further stores an input screen for searching the search information, the input display parts further displays the input screen for searching the search information to make the user input information for searching, the user-side communication part sends the information for searching to the cloud server, the server-side communication part receives the information for searching from the user terminal, the searching part searches the search information storage part, obtains the search information coinciding with the information for searching, and the corresponding page attribute information, and searches the page image storage part to obtain the corresponding page image based on the page attribute information.

In the above image file storing and searching system, the information for searching includes at least one of a keyword as a first type of information for searching, a question and answer as a second type of information for searching, a comment as a third type of information for searching, a voice as a fourth type of information for searching and an image as a fifth type of information for searching, the first type of information for searching, the second type of information for searching and the third type of information for searching are character data, and the fourth type of information for searching is voice data, and the fifth type of information for searching is image data. Wherein the screen storage part further stores a search method selection screen including an input button of the first type of information for searching, an input button of the second type of information for searching, an input button of the third type of information for searching, an input button of the fourth type of information for searching, an input button of the fifth type of information for searching, an input method selection screen including at least a character input button, a character input screen as the input screen for searching the search information, a voice input screen as the input screen for searching the search information and an image input screen as the input screen for searching the search information. When the input button of the first type of information for search is selected, the input display part displays the input method selection screen to make the user select an input method, and displays the character input screen to make the user input character data as the first type of information for searching if the character input button is selected. When the input button of the second type of information for searching is selected, the input display part displays the input method selection screen to make the user select the input method, and displays the character input screen to make the user input character data as the second type of information for searching if the character input button is selected. When the input button of the third type of information for searching is selected, the input display part displays the input method selection screen to make the user select the input method, and displays the character input screen to make the user input character data as the third type of information for searching if the character input button is selected. When the input button of the fourth type of information for searching is selected, the input display part displays the voice input screen to make the user input voice data as the fourth type of information for searching. And when the input button of the fifth type of information for searching is selected, the input display part displays the image input screen to make the user input image data as the fifth type of information for searching.

In the above image file storing and searching system, the input method selection screen further includes a voice input button. When the input button of the first type of information for searching and the voice input button are selected, the input display part displays the voice input screen to make the user input voice data, and the voice recognition part recognizes the voice data as character data and regards the character data as the first type of information for searching. When the input button of the second type of information for searching and the voice input button are selected, the input display part displays the voice input screen to make the user input voice data, and the voice recognition part recognizes the voice data as character data and regards the character data as the second type of information for searching. And when the input button of the third type of information for searching and the voice input button are selected, the input display part displays the voice input screen to make the user input voice data, and the voice recognition part recognizes the voice data as character data and regards the character data as the third type of information for searching.

In the above image file storing and searching system, the input method selection screen further includes an image input button. When the input button of the first type of information for searching and the image input button are selected, the input display part displays the image input screen to make the user input image data, and the image recognition part recognizes the image data as character data and regards the character data as the first type of information for searching. When the input button of the second type of information for searching and the image input button are selected, the input display part displays the image input screen to make the user input image data, and the image recognition part recognizes the image data as character data and regards the character data as the second type of information for searching. And when the input button of the third type of information for searching and the image input button are selected, the input display part displays the image input screen to make the user input image data, and the image recognition part recognizes the image data as character data and regards the character data as the third type of information for searching.

In the above image file storing and searching system, the page images are sent to the cloud server by a scanning and uploading device, and the user terminal includes the scanning and uploading device.

According to an aspect of the present invention, a cloud server is provided. The cloud server is communicably connected to a user terminal via a network, adds search information to an image file with a plurality of pages and performs a search based on the search information. The cloud server includes a page image storage part, a search information storage part, an addition control part and a server-side communication part, wherein the page image storage part stores at least a plurality of page images in the image file, which correspond to the pages, the server-side communication part sends at least the page images to the user terminal and receives the search information corresponding to the current page image from the user terminal, and the addition control part adds the search information to the corresponding page image and controls the search information storage part so that the search information is stored in association with the page image.

In the above cloud server, the cloud server further includes a searching part, wherein the page image storage part further stores page attribute information indicating an attribute of the page image, the search information storage part stores the page attribute information in association with the search information, and the server-side communication part receives the information for searching from the user terminal, the searching part searches the search information storage part, obtains the search information coinciding with the information for searching, and the corresponding page attribute information, and searches the page image storage part to obtain the corresponding page image based on the page attribute information.

### <First Embodiment>

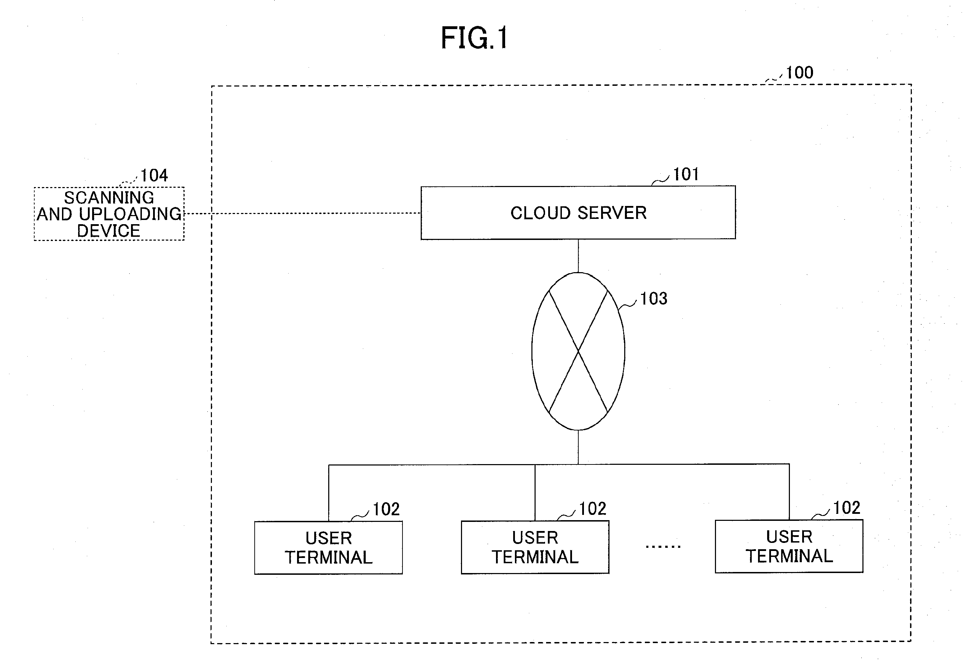

FIG. 1 is a block diagram of an image file storing and searching system according to the first embodiment of the present invention.

As illustrated in FIG. 1, an image file storing and searching system (storage and search system for image files) 100 adds search information to an image file with a plurality of pages, performs a search based on the search information, and includes a cloud server 101 and at least one user terminal 102.

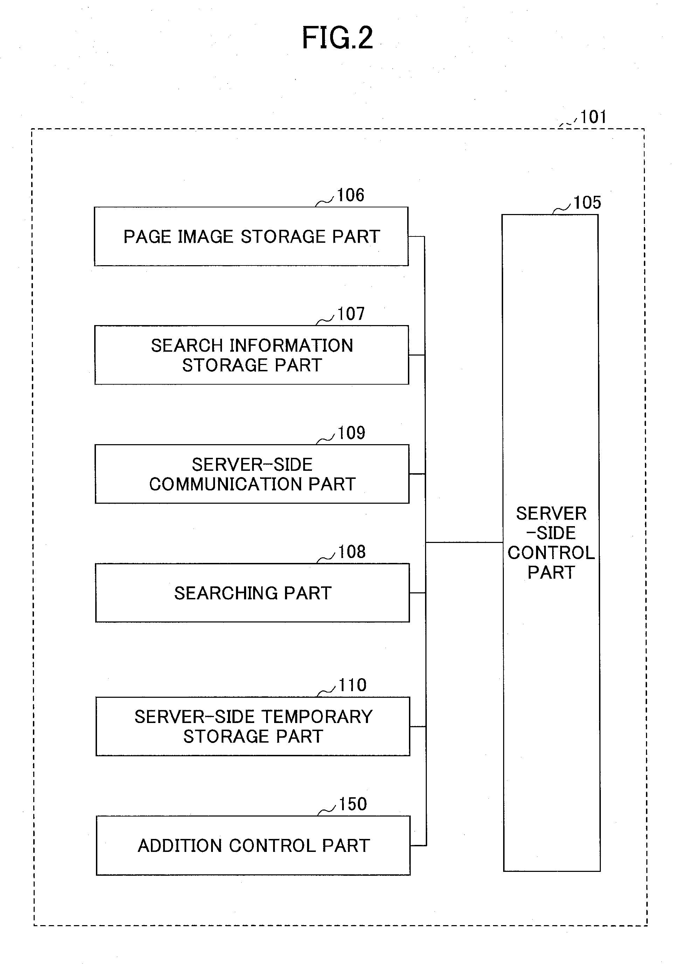

FIG. 2 is a block diagram of a cloud server according to the first embodiment of the present invention.

As illustrated in FIG. 2, the cloud server 101 stores the image file with a plurality of page images corresponding to the pages, and includes a server-side control part 105, a page image storage part 106, a search information storage part 107, a searching part 108, a server-side communication part 109, a server-side temporary storage part 110, an addition control part 150, etc.

The cloud server 101 is communicably connected to the user terminal 102 via the internet 103, respectively, and data information is transmitted and exchanged between the cloud server 101 and the user terminal 102. The cloud server 101 is also communicably connected to a scanning and uploading device 104, and can receive and store the image files that are uploaded to the scanning and uploading device 104.

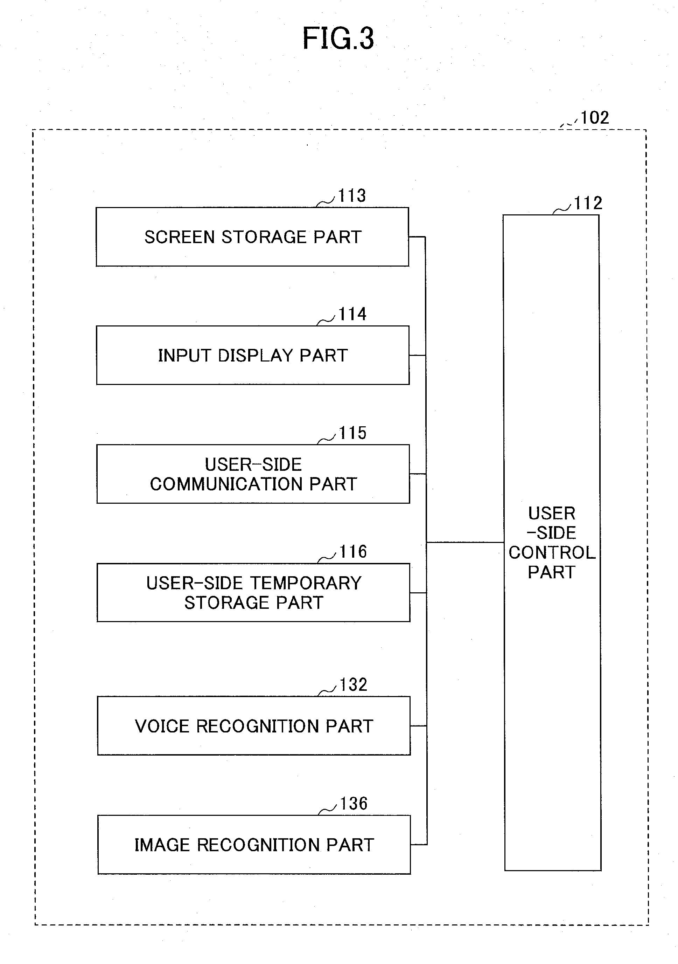

FIG. 3 is a block diagram of a user terminal according to the first embodiment of the present invention.

As illustrated in FIG. 3, each of the user terminals 102 includes a user-side temporary storage part 116, a screen storage part 113, an input display part 114, a user-side communication part 115, a voice recognition part 132, an image recognition part 136, a user-side control part 112, etc. The user terminal 102 makes the user add search information of the page images and information for searching which is used for searching the page images, and makes the user upload the image file in electronic form to the cloud server 101.

The page image storage part 106 stores the image file for each of pages, and stores the corresponding page attribute information indicating an attribute of each of the page images. Namely, the page image storage part 106 stores each of the page images constituting the image file in association with the page attribute information of the page image. The page attribute information of the page image corresponds to the page image in one-to-one correspondence, and includes information such as the size of the page image, the occupying space, the resolution, the file format, the number of times viewed, the file source, and the page number in the corresponding image file.

Each of the page images may be uploaded to the cloud server 101 after the page image is scanned by the scanning and uploading device 104, and may also be directly uploaded to the cloud server 101 via the user terminal 102. Whatever uploading method is used, the image file is divided into page images for each of the pages, and each of the page images is converted into the SWF (shockwave flash) format and is stored in the page image storage part 106.

The server-side communication part 109 performs the exchange of the data information between the components of the cloud server 101, and between the cloud server 101 and the user terminal 102. When the user terminal 102 displays the page terminal, the server-side communication part 109 sends at least page image to the user terminal 102. When the user terminal 102 adds the search information to a page image, the server-side communication part 109 receives the search information from the user terminal 102.

The server-side temporary storage part 110 temporarily stores the data information that is exchanged between the components of the cloud server 101 and between the cloud server 101 and the user terminal 102, for example, the data such as the search information and the information for searching sent from the user terminal 102.

The server-side control 105 controls the server-side communication part 109 so that the data information sent from the user terminal 102 is received, and controls the operation of the components of the cloud server 101 based on the data information.

The user-side communication part 115 performs the exchange of data information between the components of the user terminal 102, and between the user terminal 102 and the cloud server 101. For example, the user-side communication part 115 sends keywords for searching and method information to the cloud server 101, receives a search result from the cloud server 101, and sends the search result to the input display part 114 for displaying.

The screen storage part 113 stores screens such as a login screen, a page image notification screen, an input screen for adding the search information, a search method selection screen, an input screen for searching the search information, a search result screen, a character input screen, an image input screen and a voice input screen.

The input display part displays screens stored in the screen storage part 113, such as the login screen, the page image notification screen, the input screen for adding the search information, the search method selection screen, a recognition result confirmation screen, an input screen for searching the search information, a search result screen, the character input screen, the image input screen and the voice input screen, and makes the user input relevant information or perform selections.

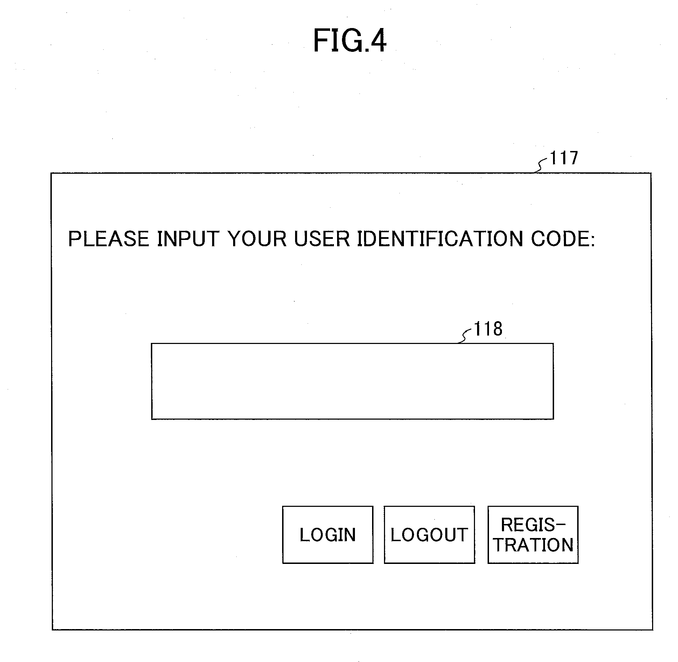

FIG. 4 is a schematic drawing of a login screen according to the first embodiment of the present invention.

As illustrated in FIG. 4, a login screen 117 make the user input a user identification code to login into the image file storing and searching system 100. The login screen 117 has the dialog "please input your user identification code" to guide the input of the user identification code by the user, and a user identification code input box 118 for the input of the user identification code by the user.

Additionally, the login screen 117 further includes a "login" button, a "logout" button and a "registration" button. If the user inputs a valid user identification code and selects the "login" button, the user logs into the image file storing and searching system 100. If the user inputs an invalid user identification code, the input display part 114 displays the dialog "Your user identification code is invalid. Please input your user identification code again or register a new user identification code". If the user selects the "logout" button, the user logouts from the image file storing and searching system 100 and the search process is terminated. If the user does not have a user identification code, the user may click the "registration" button and input user identification information such as a user ID, a user nickname, a user name, an author and a password to obtain a new user identification code. The "author" information corresponds to the user identification code in one-to-one correspondence.

It should be noted that, the login screen 117 may have a "identification code was forgotten" button, and if the user has forgotten his identification code, the user may select "identification code was forgotten" button and regain the user identification code based on the user identification information filled in a registration.

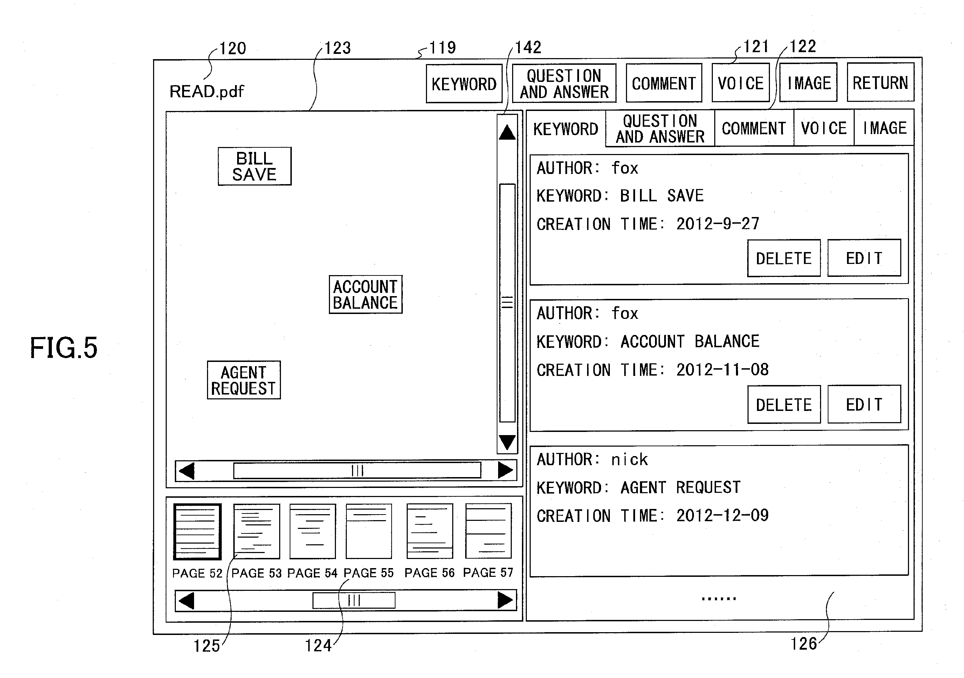

FIG. 5 is a schematic drawing of a page image notification screen according to the first embodiment of the present invention.

As illustrated in FIG. 5, the page image notification screen 119 notifies the user of the contents of the current page image, and includes an image name display region 120, a page number display region 124, a search information addition selection region 121, a search information display region 122, a page image display region 123, a thumbnail display region 125, etc. When the user logins into the image file storing and searching system 100 and selects a necessary page image or a searched page image, the input display part 114 displays the page image notification screen 119 to notify the user of the contents of the currently selected page image.

In the page image notification screen 119, the name of the image file where the currently selected page image is located is displayed to the user in the image name display region 120. The "Read.pdf" illustrated in FIG. 5 is the name of the currently selected image file.

In the page image display region 123, not only the contents of the selected page image but also the search information added to the page image are displayed to the user. The "bill save", "account balance" and "agent request" are the keyword search information added to the currently displayed page image. The page image display region 123 also includes a scroll bar 142 with a horizontal scroll bar and a vertical scroll bar. The horizontal scroll bar adjusts a horizontal display region of the page image, and the vertical scroll bar adjusts a vertical display region of the page image. If the pixels of the page image is high, the whole page image display region 123 cannot display the page image; therefore, the display region of the currently selected page image may be adjusted by adjusting the position of the scroll bar 142 thereby allowing complete displaying.

The thumbnail display region 125 displays the thumbnail of the page image currently selected by the user and the thumbnails of the adjacent page images. In the present embodiment, the thumbnail display region 125 displays six thumbnails. It should be noted that, the thumbnail display region 125 may also display fewer or more thumbnails. When any one thumbnail of the thumbnail display region 125 is selected, the page image display region 123 displays the contents of the page image corresponding to the selected thumbnail. In the thumbnail display region 125, the selected thumbnail is displayed distinguishably from other unselected thumbnails, for example, by shadows, a border frame or an added mark, so that the user can understand the currently selected thumbnail. In FIG. 5, the selected thumbnail is displayed by a border frame to be distinguished from peripheral thumbnails. By the thumbnails, the user can understand the overview of the currently selected page images and several adjacent page images, so that the necessary page image can be found quickly.

The page number display region 124 displays the page number of the currently selected page image in the image file to the user. The number of the pages is coincident with the number the displayed thumbnails.

The search information addition selection region 121 makes the user add the necessary search information to the currently selected page images. In the present embodiment, there are five types of search information that can be added by the user, a keyword as the first type search information, a question and answer as the second type search information, a comment as the third type search information, a voice as the fourth type search information and an image as the fifth type search information. The first type search information, the second type search information and the third type search information are character data, the fourth type search information is voice data, and the fifth type search information is image data. On the other hand, the search information addition selection region 121 includes the first type search information addition key, the second type search information addition key, the third type search information addition key, the fourth type search information addition key, and the fifth type search information addition key, which correspond to the above search information, respectively. As illustrated in FIG. 5, the "keyword" button is the first type search information addition key, the "question and answer" button is the second type search information addition key, the "comment" button is the third type search information addition key, the "voice" button is the fourth type search information addition key, and the "image" button is the fifth type search information addition key.

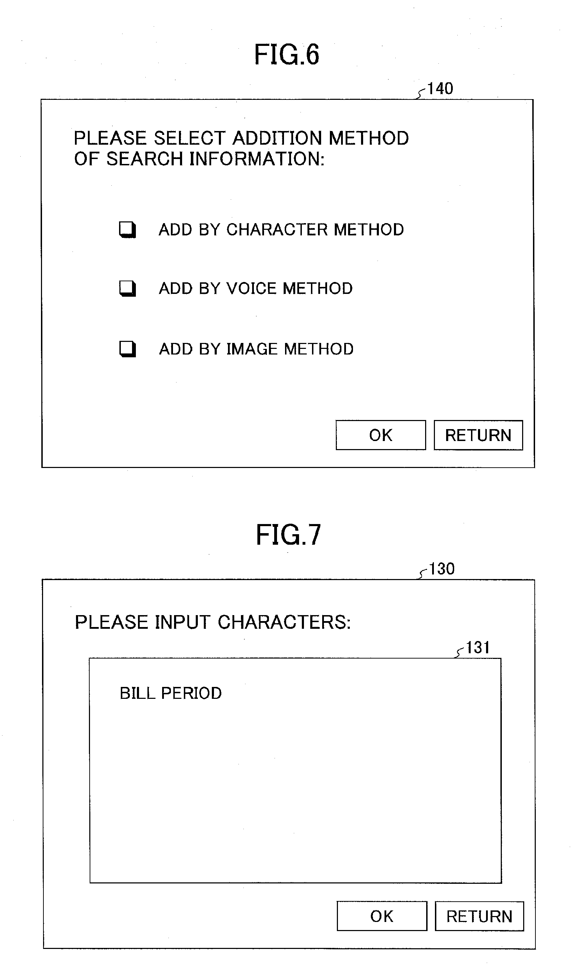

FIG. 6 is a schematic drawing of an addition method selection screen according to the first embodiment of the present invention.

As illustrated in FIG. 6, the addition method selection screen 140 makes the user select the addition method of the search information, and includes the dialog "Please select addition method of search information", a character input selection button, a voice input selection button and an image input selection button. if any one of the first type search information addition button, the second type search information addition button and the third type search information addition button is selected, the input display part 114 displays the addition method selection screen 140 to make the user select the addition method. The character input selection button is the "add by character method" button illustrated in FIG. 6, the voice input selection button is the "add by voice method" button illustrated in FIG. 6, and the image input selection button is the "add by image method" button illustrated in FIG. 6.

FIG. 7 is a schematic drawing of character input screen according to the first embodiment of the present invention.

As illustrated in FIG. 7, the character input screen 130 includes the dialog "Please input characters" and a character input box 131. If the character input selection button of the addition method selection screen 140 is selected, the input display part 114 displays the character input screen 130 to make the user input character data.

After the user inputs the character data in the character input box 131, the character data is added to the currently displayed page image as the search information. In this example, character data "bill period" is inputted, and the "bill period" is regarded as the search information of the currently displayed page image.

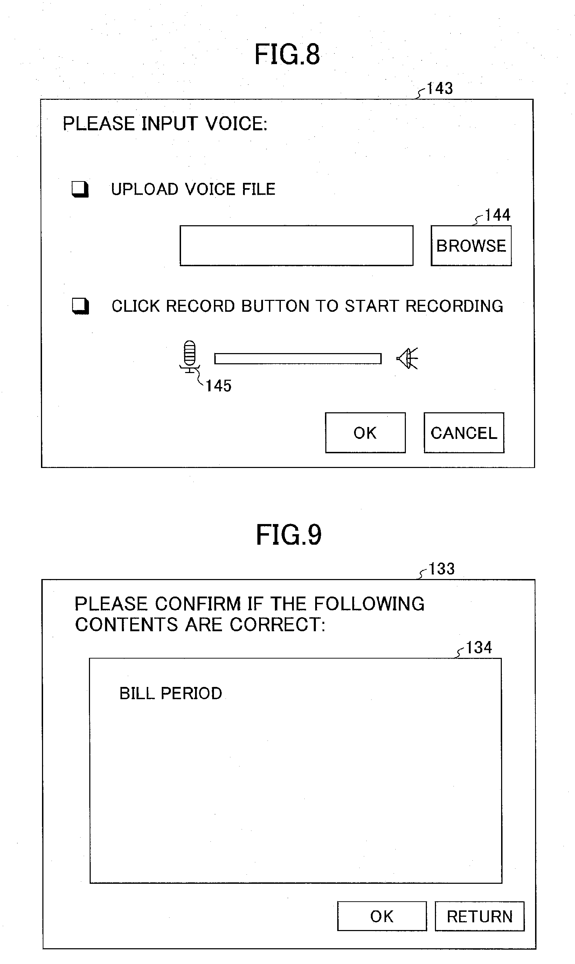

FIG. 8 is a schematic drawing of a voice input screen according to the first embodiment of the present invention.

As illustrated in FIG. 8, the voice input screen 143 makes the user input voice data. If the voice input selection button of the addition method selection screen 140 is selected, namely, the user selects the voice input as the addition method, the input display part 114 displays the voice input screen 143. The voice input screen 143 includes the dialog "Please input voice", a voice browse button 144 and a record button 145. The voice browse button is the "browse" button illustrated in FIG. 8. The record button 145 is the microphone button illustrated in FIG. 8.

If the voice browse button 144 is selected, the user may upload the voice data via the user terminal 102. If the record button 145 is selected, the user may input the voice data directly. After the input of the user is completed, the user may click the voice playback button to reproduce the voice input by himself. The voice playback is the speaker button illustrated in FIG. 8.

The voice recognition part 132 converts the voice data inputted by the user to character data. When the user inputs the voice data by any one of the above two ways, the voice recognition part 132 converts the voice data to the character data, and the character data is added to the currently displayed page image as the search information.

FIG. 9 is a schematic drawing of a recognition result confirmation screen according to the first embodiment of the present invention.

As illustrated in FIG. 9, the recognition result confirmation screen 133 includes the dialog "Please confirm if the following contents are correct" and a recognition result confirmation box 134. After the voice recognition part 132 converts the voice data to the character data, the input display part 114 displays the recognition result confirmation screen 133 to make the user confirm whether the voice recognition result is correct. If the recognition result is correct, the user selects the "OK" button, and the recognition result is added to the currently displayed page image as the search information. If the recognition result is not correct, the user modifies it to the correct character data in the recognition result confirmation box 134 and selects the "OK" button, and the modified character data is added to the currently displayed page image as the search information. The voice recognition result in FIG. 9 is "bill period", and the "bill period" is displayed in the recognition result confirmation box 134 of the recognition result confirmation screen 133.

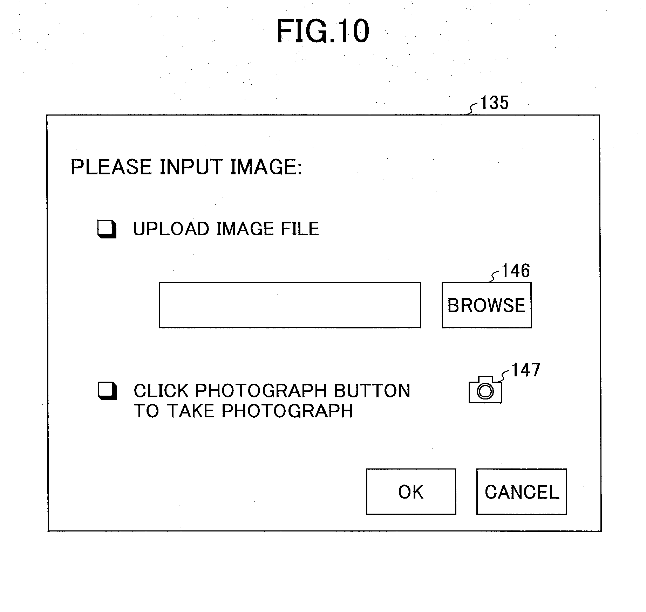

FIG. 10 is a schematic drawing of an image input screen according to the first embodiment of the present invention.

As illustrated in FIG. 10, the image input screen 135 makes the user input image data, and includes the dialog "Please input image", an image browse button 146 and a photograph button 147. If the image input selection button of the addition method selection screen 140 is selected, the input display part 114 display the image input screen 135. If the image browse button 146 and the "OK" button are selected, the user may upload the image data via the user terminal 102. If the photograph button 147 is selected, the user inputs the image data directly by taking a photo.

The image recognition part 136 converts the image data input by the user to character data. When the user input the image data by any one of the above two ways, the image recognition part 136 converts the image data to the character data, and the input display part 142 displays the recognition result confirmation screen 133 to make the user confirm whether the image recognition result is correct. If the recognition result is correct, the user selects the OK button of the result confirmation screen 133, and the recognition result is added to the currently displayed page image as the search information. If the recognition result is not correct, the user modifies it to the correct character data in the recognition result confirmation box 134 of the result confirmation screen 133 and selects the OK button, so that the modified character data is added to the currently displayed page image as the search information.

The detailed addition process of the five types of search information is as follows.

If the first type of search information addition button is selected, the input display part 114 displays the addition method selection screen 140 to make the user select the addition method. If the character input selection button is selected, the input display part 114 displays the character input screen 130 to make the user input character data as the first type of search information; if the voice input selection button is selected, the input display part 114 displays the voice input screen 143 to make the user input voice data, and the voice recognition part 132 recognizes the voice data as character data and regards the character data as the first type of search information; if the image input selection button is selected, the input display part 114 displays the image input screen 135 to make the user input image data, and the image recognition part 136 recognizes the image data as character data and regards the character data as the first type of search information.

If the second type of search information addition button is selected, the input display part 114 displays the addition method selection screen 140 to make the user select the addition method. If the character input selection button is selected, the input display part 114 displays the character input screen 130 to make the user input character data as the second type of search information; if the voice input selection button is selected, the input display part 114 displays the voice input screen 143 to make the user input voice data, and the voice recognition part 132 recognizes the voice data as character data and regards the character data as the second type of search information; if the image input selection button is selected, the input display part 114 displays the image input screen 135 to make the user input image data, and the image recognition part 136 recognizes the image data as character data and regards the character data as the second type of search information.

If the third type of search information addition button is selected, the input display part 114 displays the addition method selection screen 140 to make the user select the addition method. If the character input selection button is selected, the input display part 114 displays the character input screen 130 to make the user input character data as the second type of search information; if the voice input selection button is selected, the input display part 114 displays the voice input screen 143 to make the user input voice data, and the voice recognition part 132 recognizes the voice data as character data and regards the character data as the second type of search information; if the image input selection button is selected, the input display part 114 displays the image input screen 135 to make the user input image data, and the image recognition part 136 recognizes the image data as character data and regards the character data as the second type of search information.

If the fourth type of search information addition button is selected, the input display part 114 displays the voice input screen 143 and makes the user input voice data as the fourth type of search information.

If the fifth type of search information addition button is selected, the input display part 114 displays the image input screen and makes the user input image data as the fifth type of search information. After any one of the five types of search information is added, the search information is displayed in the search information display region 122 for the preview of the user.

The search information display region 122 displays the search information previously added to the page image, and includes a keyword display region 126, a question and answer display region 127, a comment region 128, a voice display region 148 and an image display region 149.

As illustrated in FIG. 5, the keyword display region 126 displays the added first type of search information that includes information such as keyword author, keyword content, creation time and viewing number of the keyword. The keyword display region 126 is further provided with a "delete" button and a "edit" button so that the user can modify the keyword. Additionally, the "delete" button and the "edit" button are set so as to correspond to the keyword corresponding to the user identification code, therefore only the user who creates the keyword can modify the keyword set by himself and another user cannot modify this keyword. In FIG. 5, the user for which the author is "fox" creates two keywords "bill save" and "account balance" for the page image of page 52 of the image file for which the name is "READ.pdf", and the user for which the author is "nick" creates one keyword "agent request" for the page image of the same page of the image file. When the user for which the author is "fox" logs into the image file storing and searching system, the user can delete or edit only "bill save" and "account balance", and cannot delete or edit "agent request". Additionally, the keywords created by all of the users in the page image of page 52 are displayed in the page image display region 123.

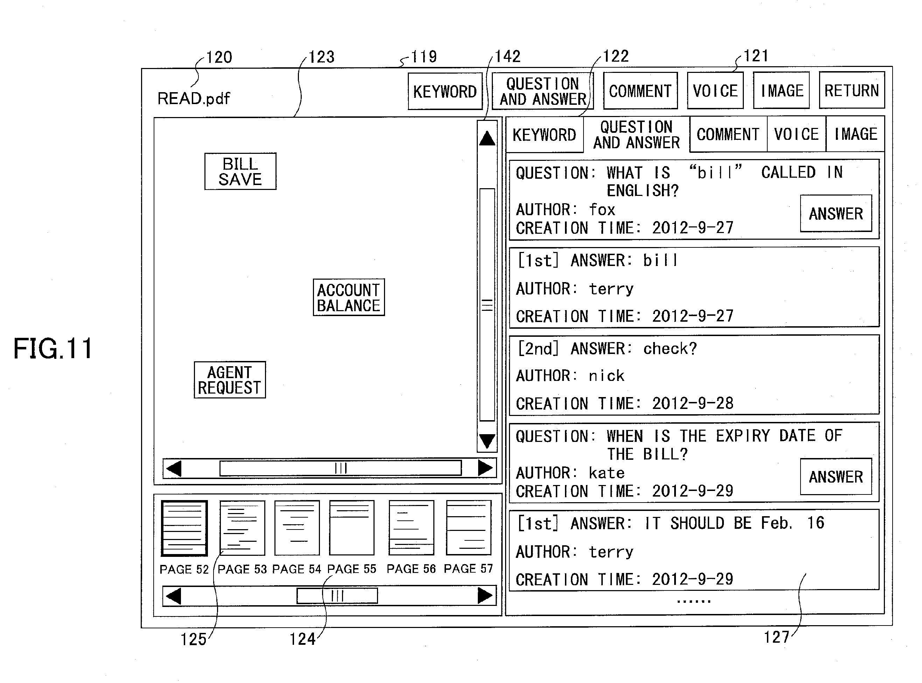

FIG. 11 is a schematic drawing of a question and answer display region according to the first embodiment of the present invention.

As illustrated in FIG. 11, the question and answer display region 127 displays the added second type search information that includes information such as authors of the questions and answers, question content, answer content, creation time, and viewing number. The questions and answers are added so as to correspond to the page image, and it is unnecessary to select a region when adding. The question and answer display region 127 has an "answer" button. If the user selects the "answer" button, the user can answer the question. If there are a plurality of answers for a question, the answers are displayed in the dialog box in the order of the answer time, so that a confusion can be avoided.

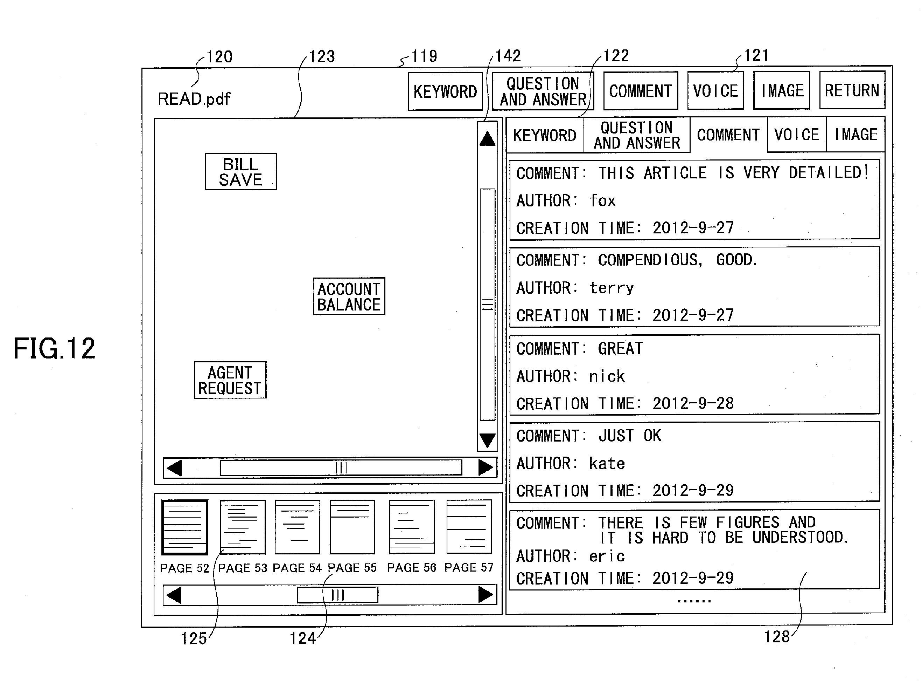

FIG. 12 is a schematic drawing of a comment display region according to the first embodiment of the present invention.

As illustrated in FIG. 12, the comment display region 128 displays the added third type search information that including information such as comment author, comment content, creation time, and viewing number. The comment is added so as to correspond to the page image, and it is unnecessary to select a region when adding. If there are a plurality of comments in a page image, the comments are displayed in the dialog box in the order of addition from top to bottom, so that a confusion can be avoided.

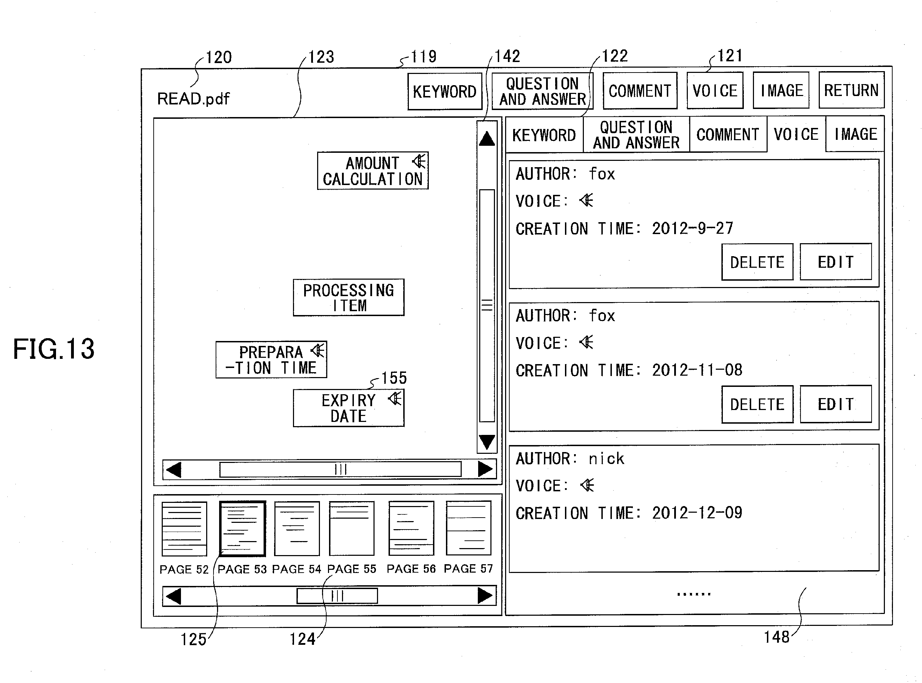

FIG. 13 is a schematic drawing of a voice display region according to the first embodiment of the present invention.

As shown in FIG. 13, the voice display region 148 displays the added fourth type of search information that includes information such as voice author, voice content identification (speaker sign), creation time and viewing number. Furthermore, the search information display box 155 of the page image display region 123 also includes a voice content identification (speaker sign) so as to present to the user that the search information in the search information display box 155 is the fourth type of search information. If there are a plurality of fourth type search information in a page image, the voice display region 148 displays these fourth type of search information in the order of the position of these search information in the page image display region 123. The voice is added so as to correspond a region of the page image. In FIG. 13, there are three of the fourth types of search information. The voice information added in the region "amount calculation" in FIG. 13 is displayed at the top of the voice display region 148. The voice information added in the "expiry data" in FIG. 13 is displayed at the bottom of the voice display region 148. The voice information added in the "preparation time" in FIG. 13 is displayed in the middle of the voice display region 148. When the user clicks the voice content identification (speaker sign), the fourth type of search information can be played.

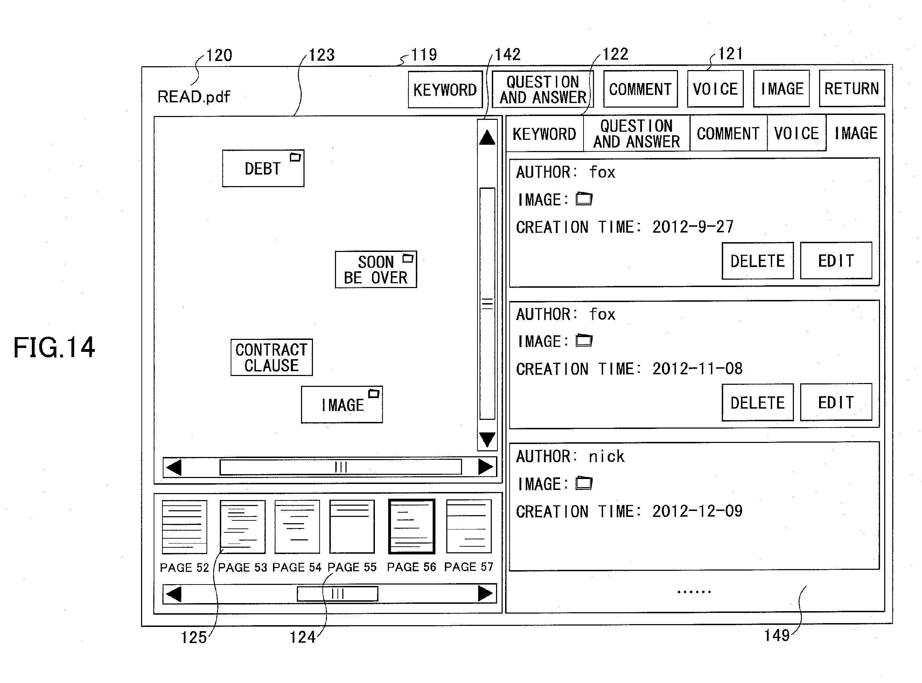

FIG. 14 is a schematic drawing of an image display region according to the first embodiment of the present invention.

As shown in FIG. 14, the image display region 149 displays the added fifth type of search information that includes information such as image author, image content identification (folder sign), creation time and viewing number. Furthermore, the search information display box 155 of the page image display region 123 also includes an image content identification (folder sign) so as to present to the user that the search information in the search information display box 155 is the fifth type of search information. If there are a plurality of the fifth type of search information in a page image, the image display region 149 displays the fifth type of search information in the order of the position of the search information in the page image display region 123. The "debt" in FIG. 14 represents the content of the selected page image, and the image content identification (folder sign) beside the "debt" represents that the fifth type of search information is added to the selected region. When the user clicks the image content identification (speaker sign), the fifth type of search information can be viewed.

The addition control part 150 adds any one of the above five types of search information to the page image and control the search information storage part 107 so that the added search information is stored in association with the page image, and controls the search information storage part 107 so that the page attribute information is stored in association with the search information.

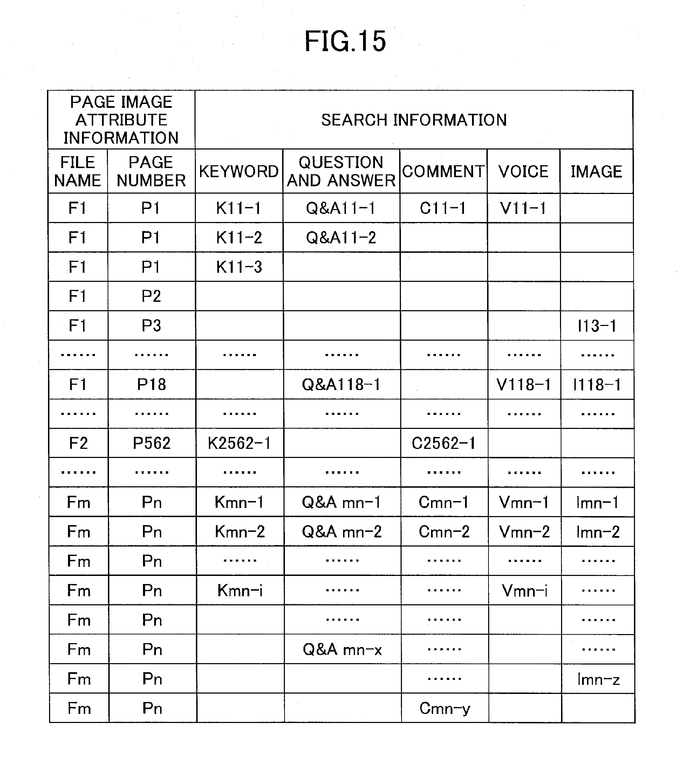

FIG. 15 is a schematic drawing of an information mapping table according to the first embodiment of the present invention.

As illustrated in FIG. 15, information mapping table 151 is generated by the addition control part 150 and is stored in the search information storage part 107. The page attribute information, the search information and the correspondence relationship between these two are stored in the information mapping table 151. The page attribute information stored in the information mapping table 151 includes information such as file name and page number. In the information mapping table 151, the five types of search information correspond to the page image, respectively, and correspond to the page number of the page image in the image file, respectively. In FIG. 15, the page image for which the file name is "F1" and the page number is "P1" includes three of the first type of search information "K11-1", "K11-2" and "K11-3", two of the second type of search information "Q&A11-1" and "Q&A11-2", one third type search information "C1101", one fourth type of search information "V11-1", and does not include the fifth type of search information. The page image for which the file name is "F1" and the page number is "P3" does not include the first type of search information, the second type of search information, the third type of search information, the fourth type of search information, and includes only one fifth type of search information "I13-1".

In the following, the process of adding the search information to the page image will be described in detail with reference to flowcharts.

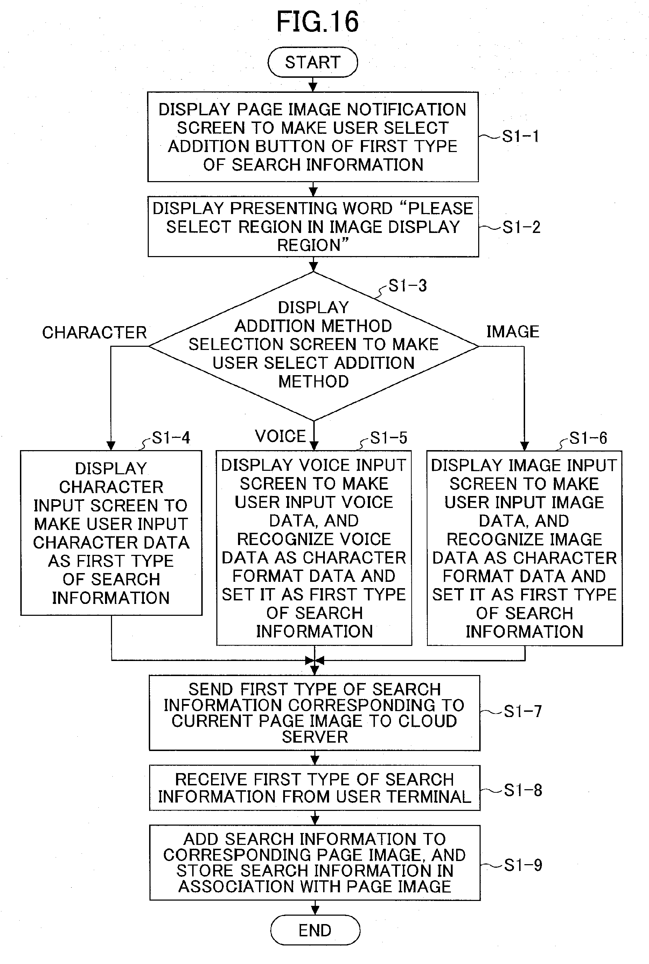

FIG. 16 is a flowchart of adding the first type of search information according to the first embodiment of the present invention.

As illustrated in FIG. 16, the addition flow of the first type search information is as follows.

Step S1-1: when the user adds the first type of search information to the currently selected and displayed page image, the input display part 114 displays the page image notification screen 119 to make the user select the first type of search information addition button from the search information addition selection region 121, and the processing proceeds to step S1-2.

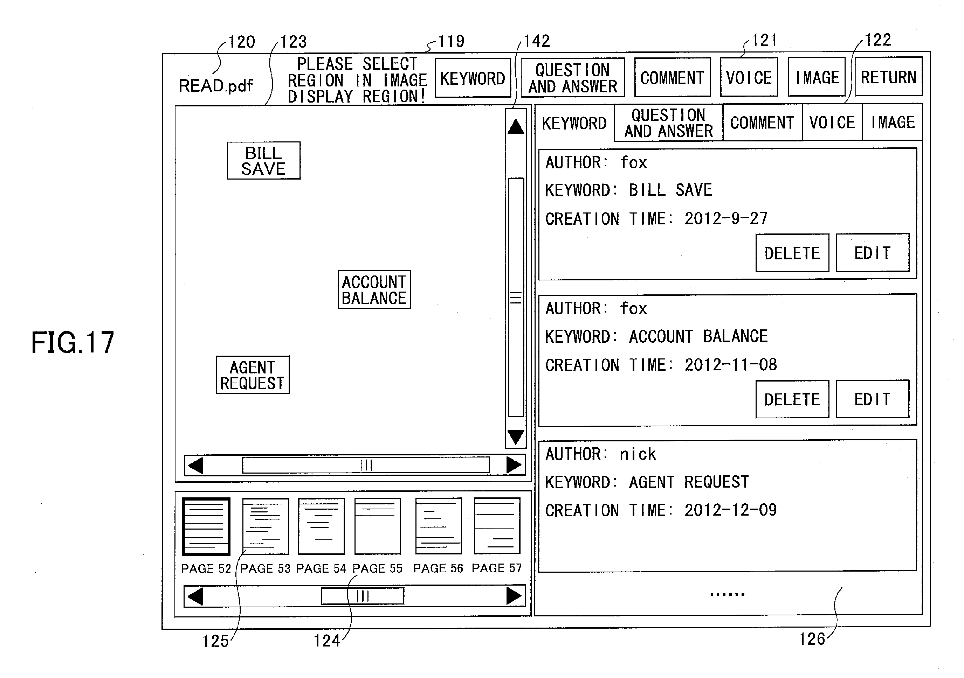

FIG. 17 is a schematic drawing of a search information addition presentation region according to the first embodiment of the present invention.

Step S1-2: as illustrated in FIG. 17, the input display part 114 displays a dialog "Please select region in image display region" in the search information addition presentation region of the page image notification screen 119 to make the user select the addition region of the keyword as the first type of search information from the page image display region 123, and the processing proceeds to step S1-3.

Step S1-3: after the user selects the addition region of the keyword, the input display part 114 displays the addition method selection screen 140 to make the user select the addition method. If the character input selection button is selected, the process proceeds to step S1-4; if the voice input selection button is selected, the process proceeds to step S1-5; and if the image input selection button is selected, the process proceeds to step S1-6.

Step S1-4: the input display part 114 displays the character input screen 130 to make the user input character data as the first type of search information, and the process proceeds to step S1-7.

Step S1-5: the input display part 114 displays the voice input screen 143 to make the user input voice data, the voice recognition part 132 recognizes the voice data as character data and regards the character data as the first type of search information, and the process proceeds to step S1-7.

Step S1-6: the input display part 114 displays the image input screen 135 to make the user input image data, the image recognition part 136 recognizes the image data as character data and regards the character data as the first type of search information, and the process proceeds to step S1-7.

Step S1-7: the user-side communication part 115 sends the first type of search information corresponding to the current page image to the cloud server 101, and the process proceeds to step S1-8.

Step S1-8: the server-side communication part 109 receives the first type of search information from the user terminal 111, and the process proceeds to step S1-9.

Step S1-9: the addition control part 150 adds the first type of search information to the corresponding page image, and controls the search information storage part 107 so that the first type of search information is stored in association with the page image.

Here the addition of the first type of search information is completed.

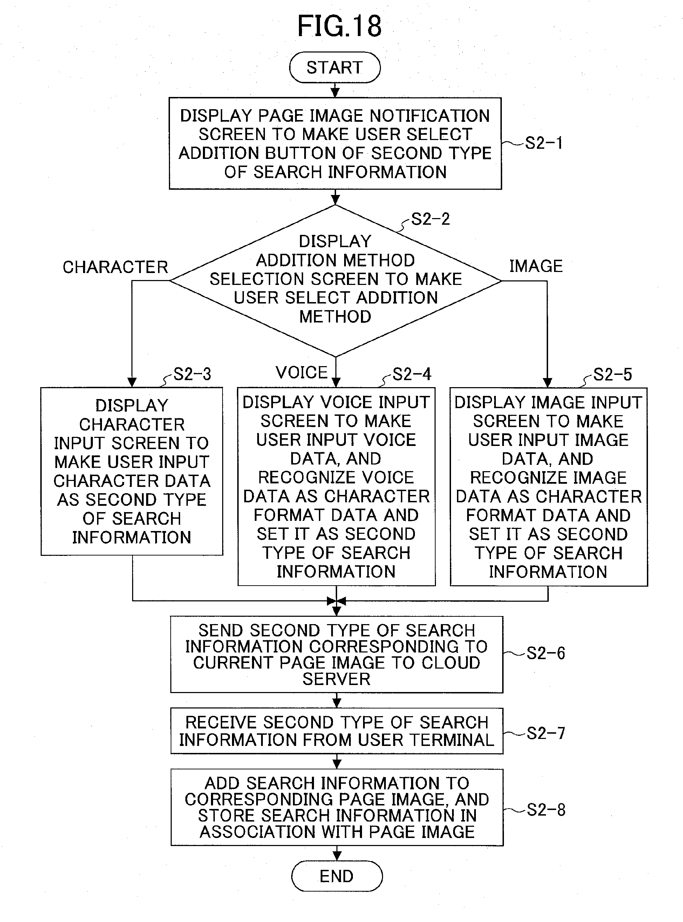

FIG. 18 is a flowchart of adding the second type of search information according to the first embodiment of the present invention.

As illustrated in FIG. 18, the addition flow of the second type of search information is as follows.

Step S2-1: when the user adds the second type of search information to the currently selected and displayed page image, the input display part 114 displays the page image notification screen 119 to make the user select the second type of search information addition button from the search information addition selection region 121, and the process proceeds to step S2-2.

Step S2-2: the input display part 114 displays the addition method selection screen 140 to make the user select the addition method. If the character input selection button is selected, the process proceeds to step S2-3; if the voice input selection button is selected, the process proceeds to step S2-4; and if the image input selection button is selected, the process proceeds to step S2-5.

Step S2-3: the input display part 114 displays the character input screen 130 to make the user input character data as the second type of search information, and the process proceeds to step S2-6.

Step S2-4: the input display part 114 displays the voice input screen 143 to make the user input voice data, the voice recognition part 132 recognizes the voice data as character data and regards the character data as the second type of search information, and the process proceeds to step S2-6.

Step S2-5: the input display part 114 displays the image input screen 135 to make the user input image data, the image recognition part 136 recognizes the image data as character data and regards the character data as the second type of search information, and the process proceeds to step S2-6.

Step S2-6: the user-side communication part 115 sends the second type of search information corresponding to the current page image to the cloud server 101, and the process proceeds to step S2-7.

Step S2-7: the server-side communication part 109 receives the second type of search information from the user terminal 111, and the process proceeds to step S2-8.

Step S2-8: the addition control part 150 adds the second type search information to the corresponding page image, and controls the search information storage part 107 so that the second type of search information is stored in association with the page image.

Here the addition of the second type of search information is completed.

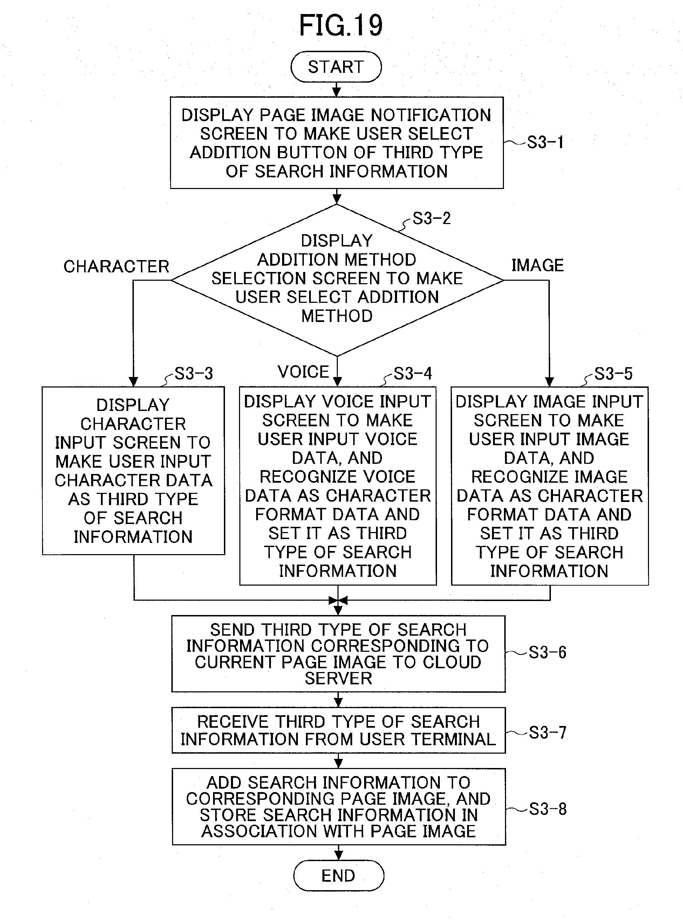

FIG. 19 is a flowchart of adding the third type of search information according to the first embodiment of the present invention.

As illustrated in FIG. 19, the addition flow of the third type of search information is as follows.

Step S3-1: when the user adds the third type of search information to the currently selected and displayed page image, the input display part 114 displays the page image notification screen 119 to make the user select the third type of search information addition button from the search information addition selection region 121, and the process proceeds to step S3-2.

Step S3-2: the input display part 114 displays the addition method selection screen 140 to make the user select the addition method. If the character input selection button is selected, the process proceeds to step S3-3; if the voice input selection button is selected, the process proceeds to step S3-4; and if the image input selection button is selected, the process proceeds to step S3-5.

Step S3-3: the input display part 114 displays the character input screen 130 to make the user input character data as the third type of search information, and the process proceeds to step S3-6.

Step S3-4: the input display part 114 displays the voice input screen 143 to make the user input voice data, the voice recognition part 132 recognizes the voice data as character data and regards the character data as the third type of search information, and the process proceeds to step S3-6.

Step S3-5: the input display part 114 displays the image input screen 135 to make the user input image data, the image recognition part 136 recognizes the image data as character data and regards the character data as the third type of search information, and the process proceeds to step S3-6.

Step S3-6: the user-side communication part 115 sends the third type of search information corresponding to the current page image to the cloud server 101, and the process proceeds to step S3-7.

Step S3-7: the server-side communication part 109 receives the third type of search information from the user terminal 111, and the process proceeds to step S2-8.

Step S2-8: the addition control part 150 adds the third type of search information to the corresponding page image, and controls the search information storage part 107 so that the third type of search information is stored in association with the page image.

Here the addition of the third type of search information is completed.

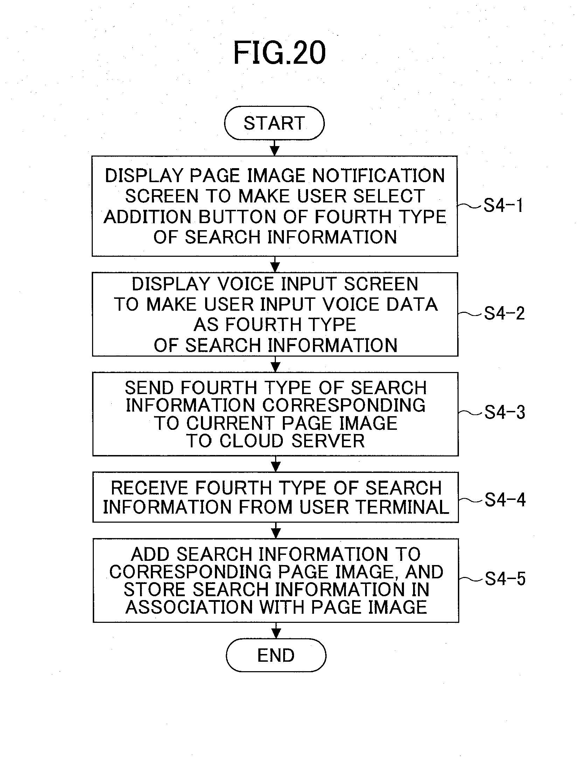

FIG. 20 is a flowchart of adding the fourth type of search information according to the first embodiment of the present invention.

As illustrated in FIG. 20, the addition flow of the fourth type of search information is as follows.

Step S4-1: when the user adds the fourth type of search information to the currently selected and displayed page image, the input display part 114 displays the page image notification screen 119 to make the user select the fourth type of search information addition button from the search information addition selection region 121, and the process proceeds to step S4-2.

Step S4-2: the user selects the addition region of the voice as the fourth of type search information from the page image display region 123, the input display part 114 displays the voice input screen 143 to make the user input voice data as the fourth type of search information, and the process proceeds to step S4-3.

Step S4-3: the user-side communication part 115 sends the fourth type of search information corresponding to the current page image to the cloud server 101, and the process proceeds to step S4-4.

Step S4-4: the server-side communication part 109 receives the fourth type of search information from the user terminal 111, and the process proceeds to step S4-5.

Step S4-5: the addition control part 150 adds the fourth type of search information to the corresponding page image, and controls the search information storage part 107 so that the fourth type of search information is stored in association with the page image.

Here the addition of the fourth type of search information is completed.

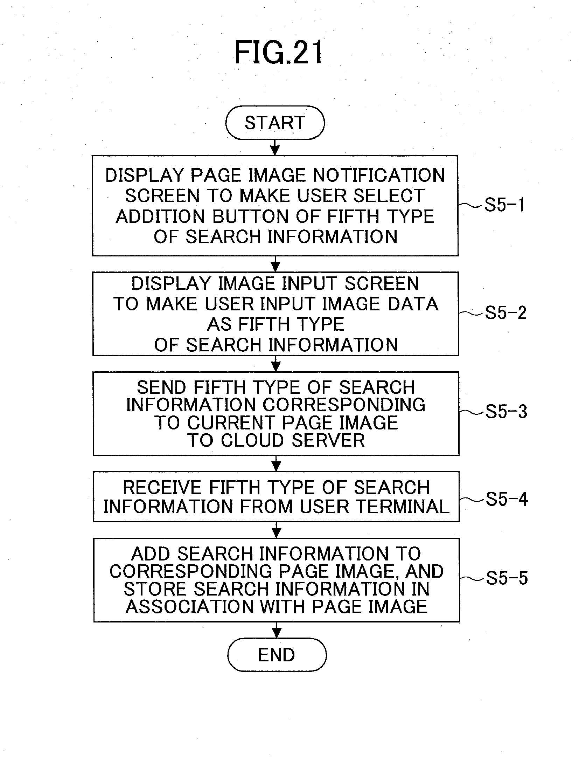

FIG. 21 is a flowchart of adding the fifth type of search information according to the first embodiment of the present invention.

As illustrated in FIG. 21, the addition flow of the fifth type search information is as follows.

Step S5-1: when the user adds the fifth type of search information to the currently selected and displayed page image, the input display part 114 displays the page image notification screen 119 to make the user select the fifth type of search information addition button from the search information addition selection region 121, and the process proceeds to step S5-2.

Step S5-2: the user selects the addition region of the image as the fifth type of search information from the page image display region 123, the input display part 114 displays the image input screen 135 to make the user input image data as the fifth type of search information, and the process proceeds to step S5-3.

Step S5-3: the user-side communication part 115 sends the fifth type of search information corresponding to the current page image to the cloud server 101, and the process proceeds to step S5-4.

Step S5-4: the server-side communication part 109 receives the fifth type of search information from the user terminal 111, and the process proceeds to step S5-5.

Step S5-5: the addition control part 150 adds the fifth type of search information to the corresponding page image, and controls the search information storage part 107 so that the fifth type of search information is stored in association with the page image.

Here the addition of the fifth type of search information is completed.

In the following, the search process of the page image will be described in detail.

The searching part 108 performs a search of the page image based on information for searching input by the user. The information for searching that is input by the user includes at least one of a keyword as the first type of information for searching, a question and answer as the second type of information for searching, a comment as the third type of information for searching, a voice as the fourth type of information for searching and an image as the fifth type of information for searching. The first type of information for searching, the second type of information for searching and the third type of information for searching are character data, and the fourth type of information for searching is voice data, and the fifth type of information for searching is image data.

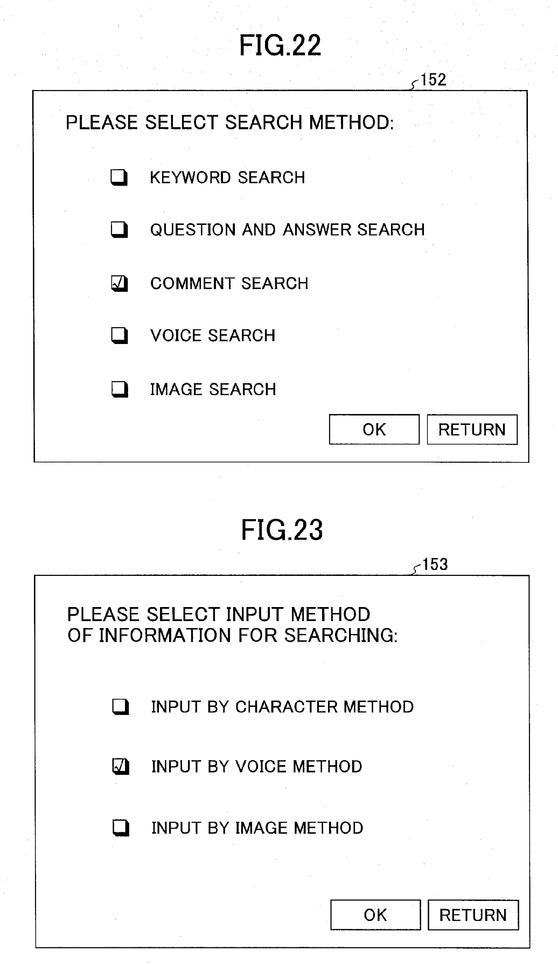

FIG. 22 is a schematic drawing of a search method selection screen according to the first embodiment of the present invention.

As illustrated in FIG. 22, the search method selection screen 152 makes the user select the search method. When the user logs into the image file storing and searching system 100, the input display part 114 displays the search method selection screen 152. In this embodiment, there are five types of search methods that can be selected by the user, a "keyword search" method for searching the first type of search information, a "question and answer search" method for searching the second type of search information, a "comment search" method for searching the third type of search information, a "voice search" method for searching the fourth type of search information, an "image search" method for searching the fifth type of search information. Furthermore, the search method selection screen 152 includes five types of input buttons of the information for searching, a "keyword search" button as the input button of the first type of information for searching, a "question and answer search" button as the input button of the second type of information for searching, a "comment search" button as the input button of the third type of information for searching, a "voice search" button as the input button of the fourth type of information for searching, and an "image search" button as the input button of the fifth type of information for searching. As illustrated in FIG. 22, when the user searches the third type of search information, the user may select the selection box in front of the "comment search" button.

FIG. 23 is a schematic drawing of an input method selection screen according to the first embodiment of the present invention.

As illustrated in FIG. 23, the input method selection screen 153 makes the user select the input method of the information for search. If any one of the input buttons of the first type of information for searching, the input button of the second type of information for searching and the input button of the third type of information for searching is selected, the input display part 114 displays the input method selection screen 153 to make the user select the input method of the information for searching. The input method selection screen 153 includes a character input button, a voice input button and an image input button. The character input button is the "input by character method" button illustrated in FIG. 23, the voice input button is the "input by voice method" button illustrated in FIG. 23, and the image input button is the "input by image method" button illustrated in FIG. 23. If the character input button of the input method selection screen 153 is selected, the input display part 114 displays the character input screen 130 to make the user input character data. If the voice input button of the input method selection screen 153 is selected, the input display part 114 displays the voice input screen 143 to make the user input voice data. If the image input button of the input method selection screen 153 is selected, the input display part 114 displays the image input screen 135 to make the user input image data.

The input processing of the five types of information for searching is as follows.

When the input button of the first type of information for searching is selected, the input display part 114 displays the input method selection screen 153 to make the user select an input method. If the character input button is selected, the input display part 114 displays the character input screen 130 to make the user input character data as the first type of information for searching; if the voice input button is selected, the input display part 114 displays the voice input screen 143 to make the user input voice data, and the voice recognition part 132 recognizes the voice data as character data and regards the character data as the first type of information for searching; and if the image input button is selected, the input display part 114 displays the image input screen 135 to make the user input image data, and the image recognition part 136 recognizes the image data as character data and regards the character data as the first type of information for searching.

When the input button of the second type of information for searching is selected, the input display part 114 displays the input method selection screen 153 to make the user select an input method. If the character input button is selected, the input display part 114 displays the character input screen 130 to make the user input character data as the second type of information for searching; if the voice input button is selected, the input display part 114 displays the voice input screen 143 to make the user input voice data, and the voice recognition part 132 recognizes the voice data as character data and regards the character data as the second type of information for searching; and if the image input button is selected, the input display part 114 displays the image input screen 135 to make the user input image data, and the image recognition part 136 recognizes the image data as character data and regards the character data as the second type of information for searching.

When the input button of the third type of information for searching is selected, the input display part 114 displays the input method selection screen 153 to make the user select an input method. If the character input button is selected, the input display part 114 displays the character input screen 130 to make the user input character data as the third type of information for searching; if the voice input button is selected, the input display part 114 displays the voice input screen 143 to make the user input voice data, and the voice recognition part 132 recognizes the voice data as character data and regards the character data as the third type of information for searching; and if the image input button is selected, the input display part 114 displays the image input screen 135 to make the user input image data, and the image recognition part 136 recognizes the image data as character data and regards the character data as the third type of information for searching.

When the input button of the fourth type of information for searching is selected, the input display part 114 displays the voice input screen 143 to make the user input voice data as the fourth type of information for searching.

When the input button of the fifth type of information for searching is selected, the input display part 114 displays the image input screen 143 to make the user input image data as the fifth type of information for searching.

In the following, the search process will be described in detail with reference to a flowchart.

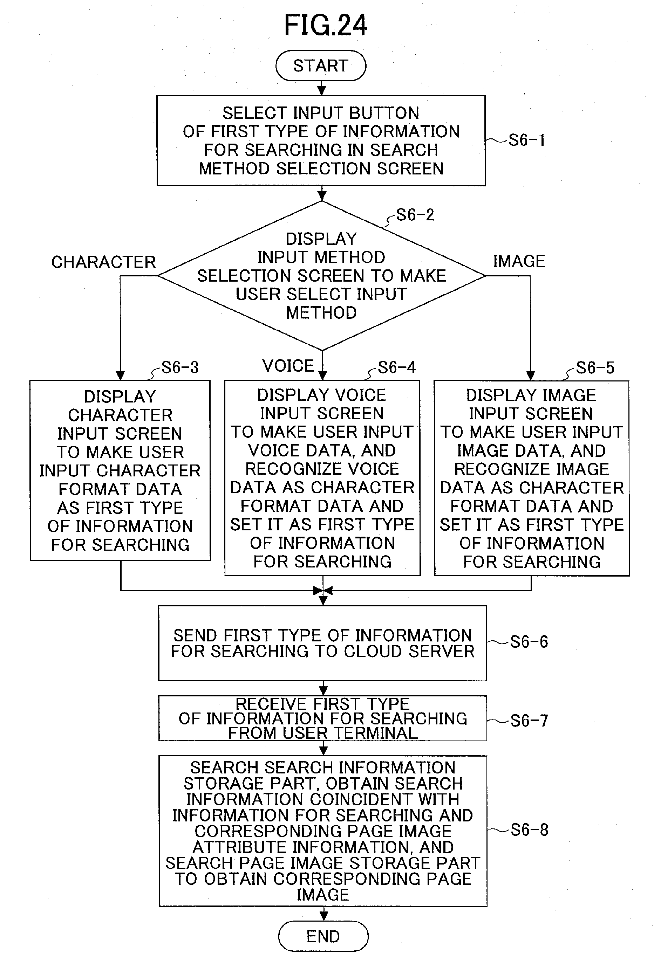

FIG. 24 is a flowchart of searching first type search information according to the first embodiment of the present invention.

As illustrated in FIG. 24, the searching process of the first type of search information is as follows.

Step S6-1: when the user performs a search based on the first type of search information, the user selects the input button of the first type of information for searching of the search method selection screen 152, and the process proceeds to step S6-2.

Step S6-2: the input display part 114 displays the input method selection screen 153 to make the user select an input method. If the character input button is selected, the process proceeds to step S6-3; if the voice input button is selected, the process proceeds to step S6-4; and if the image input button is selected, the process proceeds to step S6-5.

Step S6-3: the input display part 114 displays the character input screen 130 to make the user input character data as the first type of information for searching, and the process proceeds to step S6-6.

Step S6-4: the input display part 114 displays the voice input screen 143 to make the user input voice data, the voice recognition part 132 recognizes the voice data as character data and regards the character data as the first type of information for searching, and the process proceeds to step S6-6.

Step S6-5: the input display part 114 displays the image input screen 135 to make the user input image data, the image recognition part 136 recognizes the image data as character data and regards the character data as the first type of information for searching, and the process proceeds to step S6-6.

Step S6-6: the user-side communication part 115 sends the first type of information for searching to the cloud server 101, and the process proceeds to step S6-7.

Step S6-7: the server-side communication part 109 receives the first type of information for searching from the user terminal 111, and the process proceeds to step S6-8.

Step S6-8: the searching part 108 searches the search information storage part 107, obtains the first type of search information coinciding with the first type of information for searching, and the corresponding page attribute information, and searches the page image storage part 106 to obtain the corresponding page image based on the page attribute information.

Here, the search process of the first type of search information is completed.

The search process of the second type search of information and the search process of the third type of search information are similar to the search process of the first type of search information.

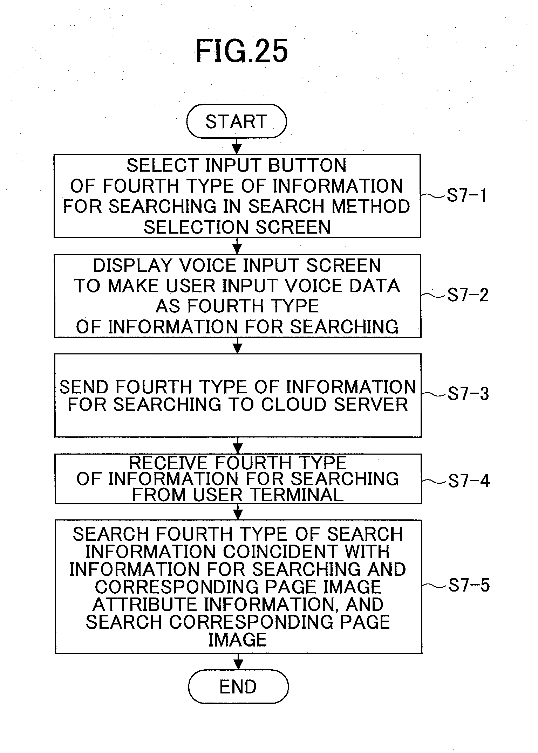

FIG. 25 is a flowchart of searching the fourth type of search information according to the first embodiment of the present invention.

As illustrated in FIG. 25, the searching processing of the fourth type search information is as follows.

Step S7-1: when the user performs a search based on the fourth type of search information, the user selects the input button of the fourth type of information for searching of the search method selection screen 152, and the processing proceeds to step S7-2.

Step S7-2: the input display part 114 displays the voice input screen 143 to make the user input voice data as the fourth type of information for searching, and the process proceeds to step S7-3.

Step S7-3: the user-side communication part 115 sends the fourth type of information for searching to the cloud server 101, and the process proceeds to step S7-4.

Step S7-4: the server-side communication part 109 receives the fourth type of information for searching from the user terminal 111, and the process proceeds to step S7-5.

Step S7-5: the searching part 108 searches the search information storage part 107, obtains the fourth type of search information coinciding with the fourth type of information for searching, and the corresponding page attribute information, and searches the page image storage part 106 to obtain the corresponding page image based on the page attribute information.

Here, the search process of the fourth type search information is completed.

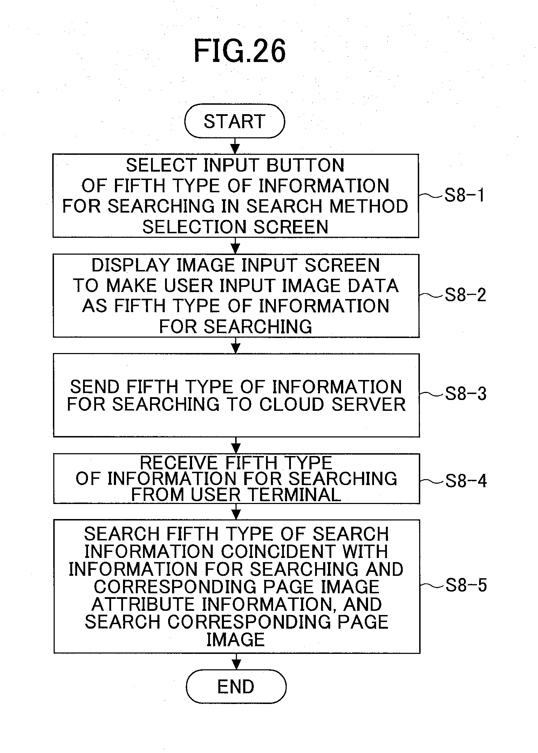

FIG. 26 is a flowchart of searching the fifth type of search information according to the first embodiment of the present invention.

As illustrated in FIG. 26, the search process of the fifth type of search information is as follows.

Step S8-1: when the user performs a search based on the fifth type of search information, the user selects the input button of the fifth type of information for searching of the search method selection screen 152, and the process proceeds to step S8-2.

Step S8-2: the input display part 114 displays the image input screen 135 to make the user input image data as the fifth type of information for searching, and the process proceeds to step S8-3.

Step S8-3: the user-side communication part 115 sends the fifth type of information for searching to the cloud server 101, and the process proceeds to step S8-4.

Step S8-4: the server-side communication part 109 receives the fifth type of information for searching from the user terminal 111, and the process proceeds to step S8-5.

Step S8-5: the searching part 108 searches the search information storage part 107, obtains the fifth type of search information coinciding with the fifth type of information for searching, and the corresponding page attribute information, and searches the page image storage part 106 to obtain the corresponding page image based on the page attribute information.

Here, the search process of the fifth type of search information is completed.

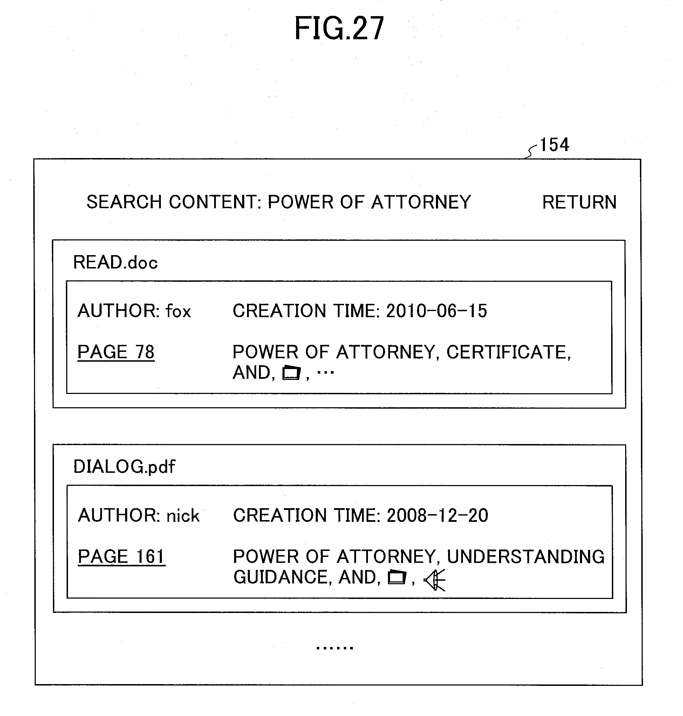

FIG. 27 is a schematic drawing of a search result screen according to the first embodiment of the present invention.

As illustrated in FIG. 27, the search result screen 154 has a search result list. If it is determined by the searching part 108 that there is search information that coincides with the information for searching, the input display part 114 displays the search result screen 154 and shows the search result list to the user. As illustrated in FIG. 27, the search result list includes names of image files, authors, and page numbers of page images including the search information coinciding with the input information for searching. The search result list also displays other search information added to the page image. If it is determined by the searching part 108 that there is no search information that coincides with the information for searching, the input display part 114 display a dialog "no matching result". When any search result in the search result list is selected, the input display part 114 displays the page image notification screen 119 to notify the user of the content of the selected page image. At this time, in the page image notification screen 119, the thumbnail of the selected page image is displayed distinguishably from the thumbnails of other unselected page images. As illustrated in FIG. 5, the thumbnail of the selected page image is displayed by a border frame so that the thumbnail of the selected page image is distinguished from the thumbnails of other unselected page images.

In this embodiment, the user terminal 102 is separated from the scanning and uploading device 104; however, the user terminal may also include the scanning and uploading device so as to have all of the functions of the scanning and uploading device, so that the present invention can be realized.

### <Effect of Embodiment>

According to the cloud server and the system for storing and searching an image file of the present embodiment, an input display part of a user terminal displays a page image notification screen to make the user add the search information to the current displayed page image, a user-side communication part sends the search information and the current displayed page image to the cloud server, and an addition control part of the cloud server adds the search information to the corresponding page image. Therefore, the user can directly search the page images constituting the image file based on the previously input search information, and the efficiency of the search can be improved.

### <Variation>

In the first embodiment, the fifth type of search information is searched by an input image data; however, the fifth type of search information may also be searched by an image classification.

When the user inputs image data to the image input screen 135, the input display part 114 may display a dialog "add the image into image classification table?", if the user agrees to add the image into the image classification table, the input display part 114 displays an image classification addition screen.

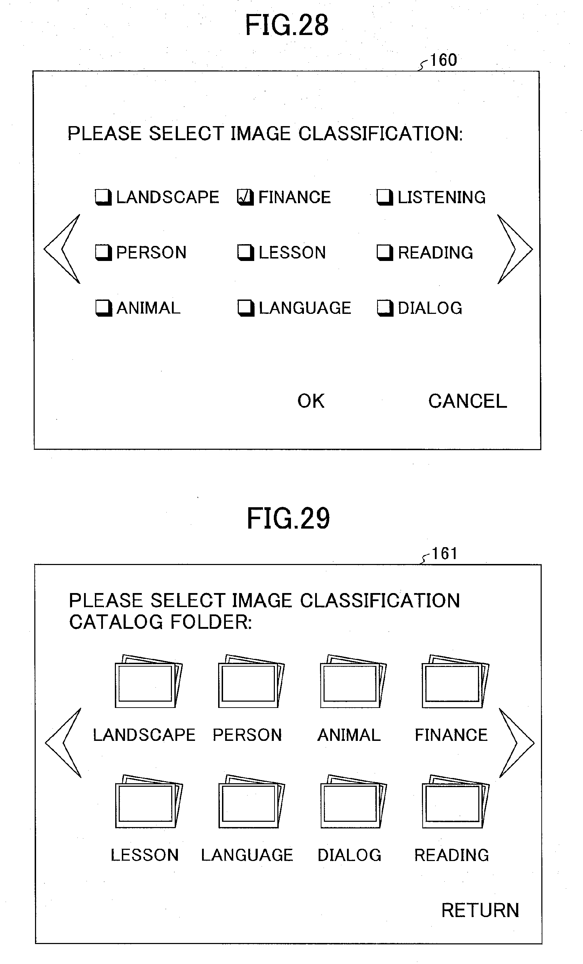

FIG. 28 is a schematic drawing of an image classification addition screen according to a variation of the present invention.

As illustrated in FIG. 28, the image classification addition screen 160 is stored in the screen storage part 113, and includes a plurality of image classification options. The user may add the input image into any image classification as needed. As illustrated in FIG. 28, if the user wants to add the input image data into the "finance" classification, the user may select the "finance" classification, and addition control part 150 add the fifth type of search information to the "finance" classification and control the search information storage part 107 so that the fifth type of search information is stored in association with the "finance" classification.

During the search, the user selects the input button of the fifth type of information for searching of the search method selection screen 152, and the input display part 114 displays the image classification search screen 161.

FIG. 29 is a schematic drawing of an image classification search screen according to a variation of the present invention.

As illustrated in FIG. 29, the image classification search screen 161 is stored in the screen storage part 113, and includes a plurality of image classifications such as "landscape", "person", etc. The image data added by the user is included in these image classifications. The arrow symbols on the left and right sides of the image classification search screen 161 are used to select the previous page or the next page. As illustrated in FIG. 29, if the user wants to view the image data in the "finance" classification, the user may select the "finance" classification, and in this time, the input display part 114 displays an image viewing screen.

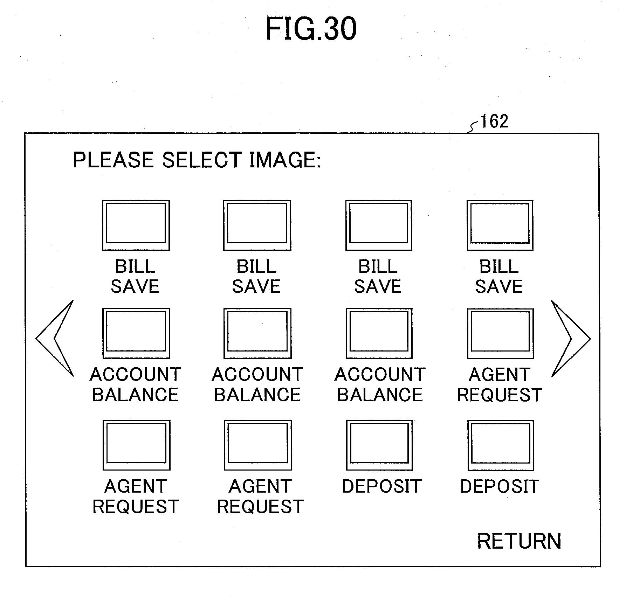

FIG. 30 is a schematic drawing of an image viewing screen according to a variation of the present invention.

As illustrated in FIG. 30, the image viewing screen 162 is stored in the screen storage part 113, and includes a plurality of images in an image classification. When the user selects an image, the input display part 114 displays the page image notification screen 119 of the page image corresponding to the image so as to make the user view the content of the page image.

### <Effect of Variation>

According to the variation, the addition and the search of the input image data is performed by the image classification; therefore, the user can view the contents of the image data directly, and the search is visible, simple and easy for computer beginners.

The present application is based on and claims the benefit of priority of Chinese Priority Application No.201310330700.2 filed on July 31, 2013, the entire contents of which are hereby incorporated by reference.

## Claims

1. A system for storing and searching image files, the system adding search information to the image file with a plurality of pages and performing a search based on the search information, the system comprising:
a cloud server, configured to store the image files with a plurality of page images corresponding to the pages; and
at least one user terminal, configured to be communicably connected to the cloud server via a network, respectively,
wherein the cloud server includes a page image storage part, a search information storage part, an addition control part and a server-side communication part,
the user terminal includes a screen storage part, a user-side communication part and an input display part,
the page image storage part stores at least the page images,
the server-side communication part sends at least the page images to the user terminal,
the user-side communication part receives at least the page images from the cloud server,
the screen storage part stores at least a page image notification screen and an input screen for adding the search information,
the input display part displays at least the page image notification screen to notify a user of the contents of the current page image, and displays the input screen for adding the search information to make the user input the search information based on the contents,
the user-side communication part sends the search information corresponding to the current page image to the cloud server,
the server-side communication part receives the search information from the user terminal, and
the addition control part adds the search information to the corresponding page image, and controls the search information storage part so that the search information is stored in association with the page image.

2. The system for storing and searching image files according to claim 1, wherein the page image storage part further stores page attribute information indicating an attribute of the page image,
the user-side communication part receives the page attribute information from the cloud server while receiving the page images simultaneously, sends the corresponding page attribute information to the cloud server while sending the search information simultaneously, and
the addition control part controls the search information storage part so that the page attribute information is stored in association with the search information.

3. The system for storing and searching image files according to claim 2,
wherein the search information includes at least one of a keyword as a first type of search information, a question and answer as a second type of search information, a comment as a third type of search information, a voice as a fourth type of search information and an image as a fifth type of search information,
the first type of search information, the second type of search information and the third type of search information are character data, and the fourth type of search information is voice data, and the fifth type of search information is image data.

4. The system for storing and searching image files according to claim 3,
wherein the page image notification screen includes a search information addition method selection region, the search information addition method selection region includes a first type of search information addition button, a second type of search information addition button, a third type of search information addition button, a fourth type of search information addition button and a fifth type of search information addition button,
the screen storage part stores an addition method selection screen including at least a character input selection button, a character input screen as the input screen for adding the search information, a voice input screen as the input screen for adding the search information and an image input screen as the input screen for adding the search information,
when the first type of search information addition button is selected, the input display part displays the addition method selection screen to make the user select an addition method, and displays the character input screen to make the user input character data as the first type of search information if the character input selection button is selected,
when the second type of search information addition button is selected, the input display part displays the addition method selection screen to make the user select the addition method, and displays the character input screen to make the user input character data as the second type of search information if the character input selection button is selected,
when the third type of search information addition button is selected, the input display part displays the addition method selection screen to make the user select the addition method, and displays the character input screen to make the user input character data as the third type of search information if the character input selection button is selected,
when the fourth type of search information addition button is selected, the input display part displays the voice input screen to make the user input voice data as the fourth type of search information, and
when the fifth type of search information addition button is selected, the input display part displays the image input screen to make the user input image data as the fifth type of search information.

5. The system for storing and searching image files according to claim 4,
wherein the system further comprises a voice recognition part,
the addition method selection screen further includes a voice input selection button,
when the first type of search information addition button and the voice input selection button are selected, the input display part displays the voice input screen to make the user input voice data, and the voice recognition part recognizes the voice data as character data and regards the character data as the first type of search information,
when the second type of search information addition button and the voice input selection button are selected, the input display part displays the voice input screen to make the user input voice data, and the voice recognition part recognizes the voice data as character data and regards the character data as the second type of search information, and
when the third type of search information addition button and the voice input selection button are selected, the input display part displays the voice input screen to make the user input voice data, and the voice recognition part recognizes the voice data as character data and regards the character data as the third type of search information.

6. The system for storing and searching image files according to claim 4,
wherein the system further comprises an image recognition part,
the addition method selection screen further includes an image input selection button,
when the first type of search information addition button and the image input selection button are selected, the input display part displays the image input screen to make the user input image data, and the image recognition part recognizes the image data as character data and regards the character data as the first type of search information,
when the second type of search information addition button and the image input selection button are selected, the input display part displays the image input screen to make the user input image data, and the image recognition part recognizes the image data as character data and regards the character data as the second type of search information, and
when the third type of search information addition button and the image input selection button are selected, the input display part displays the image input screen to make the user input image data, and the image recognition part recognizes the image data as character data and regards the character data as the third type of search information.

7. The system for storing and searching image files according to claim 5 or 6,
wherein the cloud server further includes a searching part,
the screen storage part further stores an input screen for searching the search information,
the input display parts further displays the input screen for searching the search information to make the user input information for searching,
the user-side communication part sends the information for searching to the cloud server,
the server-side communication part receives the information for searching from the user terminal,
the searching part searches the search information storage part, obtains the search information coinciding with the information for searching, and the corresponding page attribute information, and searches the page image storage part to obtain the corresponding page image based on the page attribute information.

8. The system for storing and searching image files according to claim 7,
wherein the information for searching includes at least one of a keyword as a first type of information for searching, a question and answer as a second type of information for searching, a comment as a third type of information for searching, a voice as a fourth type of information for searching and an image as a fifth type of information for searching,
the first type of information for searching, the second type of information for searching and the third type of information for searching are character data, and the fourth type of information for searching is voice data, and the fifth type of information for searching is image data,
wherein the screen storage part further stores a search method selection screen including an input button of the first type of information for searching, an input button of the second type of information for searching, an input button of the third type of information for searching, an input button of the fourth type of information for searching, an input button of the fifth type of information for searching, an input method selection screen including at least a character input button, a character input screen as the input screen for searching the search information, a voice input screen as the input screen for searching the search information and an image input screen as the input screen for searching the search information,
when the input button of the first type of information for searching is selected, the input display part displays the input method selection screen to make the user select an input method, and displays the character input screen to make the user input character data as the first type of information for searching if the character input button is selected,
when the input button of the second type of information for searching is selected, the input display part displays the input method selection screen to make the user select the input method, and displays the character input screen to make the user input character data as the second type of information for searching if the character input button is selected,
when the input button of the third type of information for searching is selected, the input display part displays the input method selection screen to make the user select the input method, and displays the character input screen to make the user input character data as the third type of information for searching if the character input button is selected,
when the input button of the fourth type of information for searching is selected, the input display part displays the voice input screen to make the user input voice data as the fourth type of information for searching, and
when the input button of the fifth type of information for searching is selected, the input display part displays the image input screen to make the user input image data as the fifth type of information for searching.

9. The system for storing and searching image files according to claim 8,
wherein the input method selection screen further includes a voice input button,
when the input button of the first type of information for searching and the voice input button are selected, the input display part displays the voice input screen to make the user input voice data, and the voice recognition part recognizes the voice data as character data and regards the character data as the first type of information for searching,
when the input button of the second type of information for searching and the voice input button are selected, the input display part displays the voice input screen to make the user input voice data, and the voice recognition part recognizes the voice data as character data and regards the character data as the second type of information for searching, and
when the input button of the third type of information for searching and the voice input button are selected, the input display part displays the voice input screen to make the user input voice data, and the voice recognition part recognizes the voice data as character data and regards the character data as the third type of information for searching.

10. The system for storing and searching image files according to claim 8,
wherein the input method selection screen further includes an image input button,
when the input button of the first type of information for searching and the image input button are selected, the input display part displays the image input screen to make the user input image data, and the image recognition part recognizes the image data as character data and regards the character data as the first type of information for searching,
when the input button of the second type of information for searching and the image input button are selected, the input display part displays the image input screen to make the user input image data, and the image recognition part recognizes the image data as character data and regards the character data as the second type of information for searching, and
when the input button of the third type of information for searching and the image input button are selected, the input display part displays the image input screen to make the user input image data, and the image recognition part recognizes the image data as character data and regards the character data as the third type of information for searching.

11. The system for storing and searching image files according to claim 1,
wherein the page images are sent to the cloud server by a scanning and uploading device, and
the user terminal includes the scanning and uploading device.

12. A cloud server, the cloud server communicably connected to a user terminal via a network, adding search information to an image file with a plurality of pages and performing a search based on the search information, the cloud server comprising:
a page image storage part, a search information storage part, an addition control part and a server-side communication part,
wherein the page image storage part stores at least a plurality of page images in the image file, which correspond to the pages,
the server-side communication part sends at least the page images to the user terminal and receives the search information corresponding to the current page image from the user terminal, and
the addition control part adds the search information to the corresponding page image and controls the search information storage part so that the search information is stored in association with the page image.

13. The cloud server according to claim 12, further comprising:
a searching part,
wherein the page image storage part further stores page attribute information indicating an attribute of the page image,
the search information storage part stores the page attribute information in association with the search information, and
the server-side communication part receives the information for searching from the user terminal, the searching part searches the search information storage part, obtains the search information coinciding with the information for searching, and the corresponding page attribute information, and searches the page image storage part to obtain the corresponding page image based on the page attribute information.
